# EUROPEAN PATENT SPECIFICATION

(11) **EP 1 677 994 B1**
(45) Date of publication and mention of the grant of the patent: **12.12.2007**
(21) Application number: 04791932.9
(22) Date of filing: 29.10.2004
(51) Int. Cl.: B60C 1/00

(54) **TIRE AND CROSSLINKABLE ELASTOMERIC COMPOSITION**
REIFEN UND VERNETZBARE ELASTOMERE ZUSAMMENSETZUNG
PNEUMATIQUE ET COMPOSITION ELASTOMERE RETICULABLE

(30) Priority: 31.10.2003 WO PCT/EP03/12137
(43) Date of publication of application: 12.07.2006
(73) Proprietor: Pirelli Tyre S.p.A., 20126 Milano (IT)
(72) Inventor: GALIMBERTI, Maurizio, Pirelli Pneumatici S.p.A, I-20126 Milano (IT); GIANNINI, Luca, Pirelli Pneumatici S.p.A, I-20126 Milano (IT); FINO, Luigi, Pirelli Pneumatici S.p.A, I-20126 Milano (IT)
(74) Representative: Giannesi, Pier Giovanni
(86) International application number: PCT/IT2004/000598
(87) International publication number: WO 2005/042278

(56) References cited:
- EP-A- 0 265 070
- EP-A- 1 074 582
- EP-A- 1 193 085
- EP-A- 1 273 616
- WO-A-02/10269
- US-A1- 2002 095 008
- US-A1- 2003 191 224

## Description

The present invention relates to a tire and to a crosslinkable elastomeric composition.

More in particular the present invention relates to a tire including at least one structural element obtained by crosslinking a crosslinkable elastomeric composition comprising at least one diene elastomeric polymer, at least one layered material, at least one methylene donor compound and at least one methylene acceptor compound.

Moreover, the present invention also relates to a crosslinkable elastomeric composition comprising at least one diene elastomeric polymer, at least one layered material, at least one methylene donor compound and at least one methylene acceptor compound, as well as to a crosslinked manufactured article obtained by crosslinking said crosslinkable elastomeric composition.

In the rubber industry, in particular that of tires for vehicle wheels, it is known practice to add organic fibres such as, for example, polyamide fibres (in particular, aromatic polyamide fibres known as "aramide fibres"), polyester fibres or polyolefin fibres, to elastomeric compositions, in order to improve their mechanical properties (both static and dynamic).

For example, United States Patent US 4,871,004 discloses a composition comprising a crosslinkable elastomer and an effective amount of aramid fibres. Examples of crosslinkable elastomers which are useful for this purpose are: natural rubber, cis-1,4-polyisoprene, polybutadiene (in solution or in emulsion), styrene/butadiene copolymers (in solution or in emulsion), butyl rubbers and halobutyl rubbers, EPDM, butadiene/acrylonitrile rubbers, neoprene, vinylpolybutadiene and, in general, polymers with viscoelastic properties, or blends thereof. Said composition is said to be usable in all cases in which rubbers with a high level of hardness and/or a high modulus are required, in particular in vehicle tires (for example as bead filler). One of the reasons which justifies the use of the abovementioned fibres is the improvement in the structural strength of the crosslinked manufactured article.

European Patent Application EP 691,218 discloses a tire component for a pneumatic tire comprising a reinforced crosslinkable composition, said composition including a crosslinkable elastomeric matrix material having dispersed therein an effective reinforcing amount of partially oriented fibres having a modulus of less than 10 GPa, preferably less than 6 GPa. As an alternative embodiment, a tire component may be reinforced with a mixture of a partially oriented fibres and fibrillated pulp fibres (i.e. Kevlar^{®} pulp). The partially oriented fibres may comprise as specific examples, polyamides, polyesters, polyolefins, and a polymer selected from the group consisting of nylon 6, nylon 46, nylon 66, polyethylene, polypropylene, polyethylene-terephthalate (PET). The above mentioned reinforced crosslinkable composition is said to have an improved stiffness without negatively affecting its remaining properties such as, for example, hysteresis and fatigue endurance.

International Patent Application WO 02/24596 in the name of the Applicant discloses a tire with an elastomeric intermediate layer disposed between the tread band and the belted plies wherein the elastomeric intermediate layer is made of a fibre-reinforced material. Said elastomeric intermediate layer may be reinforced with short reinforcing fibres such as, for example, aramide fibres (i.e. Kevlar^{©} pulp) to improve its modulus of elasticity, among other mechanical properties.

The mechanical properties of the elastomeric compositions may be also improved by increasing crosslinking density of the elastomeric composition by using a large amount of sulfur; or by using a large amount of carbon black, or a very fine and structured carbon black which has a high reinforcing capacity.

However, the above ways of improving mechanical properties may lead to a number of drawbacks.

For example, the addition of organic fibres due to their poor dispersion, may impair the processability of the non-crosslinked elastomeric compositions and therefore the quality of the finished product, both in term of mechanical properties and of surface appearance. This may cause a reduction in their tear resistance and detachments from the other elastomeric compositions present in the tire both during manufacturing process or during use of the same. Moreover, the organic fibres have a remarkable anisotropic behaviour, namely they substantially orient in the direction of the shear forces exerted during extrusion and calendering of the non-crosslinked elastomeric composition to form a layer of elastomeric material (usually named "calendering direction"), so as to give to the tyre essentially a longitudinal reinforcement, namely a reinforcement essentially in the circumferential direction of the tire.

On the other hand, the use of a large amount of sulfur may cause remarkable reversion phenomena, which result in modifications of the tire performances during use. On the other side, it is known that carbon black gives pronounced hysteresis properties to the elastomeric composition, namely an increase in the dissipated heat under dynamic conditions, which results in an increase in the rolling resistance of the tire. In addition, a large amount of carbon black remarkably increases viscosity of the non-crosslinked elastomeric composition and, consequently, has a negative impact on its processability and extrudability.

To overcome the drawbacks caused by the use of carbon black, the so called "white" reinforcing fillers are usually used, in paricular silica, in total or partial replacement for the carbon black. However, al though the use of said reinforcing fillers leads to good tear resistance, it also entails a series of drawbacks essentially related to the poor affinity of these fillers with respect to the elastomeric polymers commonly used in the manufacturing of tires. In particular, to obtain a good degree of dispersion of the silica in the elastomeric matrix, it is necessary to subject the elastomeric composition to a prolonged thermomechanical blending action. To increase the affinity of the silica with the elastomeric matrix, it is necessary to use suitable coupling agents such as, for example, sulfur-containing organosilane products. However, the need to use such coupling agents places a limitation on the maximum temperature which may be reached during the blending and thermomechanical processing operations of the elastomeric composition, to avoid the penalty of an irreversible degradation of the coupling agent which might cause a premature crosslinking of the elastomeric compositions (scorching phenomena).

Therefore, other ways have been found to improve mechanical properties of the elastomeric compositions.

For example, United States Patent US 5,840,795 relates to a treated clay product comprising a hydrous kaolin clay surface treated with a multi-component system consisting of a functional silane, a methylene donor compound such as hexamethylenetetramine, and a multifunctional methylene acceptor such as resorcinol. The abovementioned surface treated clay may be used as a reinforcing filler in elastomeric compositions which are said to give crosslinked manufactured articles having improved physical properties such as modulus, tensile, tear, wear resistance and/or resistance to heat build-up.

European Patent Application EP 1,193,085 relates to a tire with a rubber/cord laminate, sidewall insert and apex including a rubber composition comprising, based upon parts by weight of an ingredient per 100 parts by weight elastomer (phr):
(A) 100 phr of at least one diene-base elastomer;
(B) 30 phr to 100 phr of particulate reinforcement dispersed within said elastomer(s) selected from intercalated smectite, preferably montmorillonite, clay particles, carbon black, synthetic amorphous silica and silica treated carbon black, comprised of:
   (1) 1 phr to 10 phr of said intercalated, layered, thin, substantially two dimensional smectite, preferably montmorillonite, clay particles of which at least a portion thereof is in a form of thin, flat, substantially two dimensional exfoliated platelets derived from said intercalated clay; and
   (2) 20 phr to 99 phr of at least one additional reinforcing filler comprised of carbon black, synthetic amorphous silica and silica treated carbon black.

The abovementioned rubber composition is said to have improved stiffness and tensile modulus with only a small increase of Tan delta values.

United States Patent Application 2003/0004250 relates to a light weight rubber composition comprising (1) an amino group containing rubbery polymer, wherein said amino group containing rubbery polymer contains from about 0.1 weight percent to about 20 weight percent of a monomer containing an amino group, and (2) from about 0.1 phr to about 25 phr of a 2:1 layered silicate clay. The abovementioned rubber composition, having improved tensile strength and elongation at break, is said to be useful in the manufacturing of rubber articles such as power transmission belts and tires, in particular tire tread band and sidewalls.

However, also the use of said layered material may cause some drawbacks.

The Applicant has noticed that, in particular in the case of elastomeric compositions which usually require a high reinforcement such as those used, for example, for making bead fillers, sidewall inserts, tread underlayers, tread base, the use of a layered material as reinforcing filler may not be sufficient to achieve the desired properties.

In order to achieve more reinforcement, a large amount of layered material may be used. However, some drawbacks may be encountered in the elastomeric compositions so obtained such as, for example, a decrease in their tear resistance and detachments from the other elastomeric compositions present in the tire, in particular during the use of the same. Moreover, in particular in the case of layered material previously treated with a compatibilizing agent (for example, a quaternary ammonium or phosphonium salt) a premature crosslinking of said elastomeric compositions (scorching phenomena) may occur.

The Applicant has faced the problem of providing elastomeric compositions having improved mechanical properties both static (in particular, tensile modulus) and dynamic (in particular, elastic modulus). The above results should be achieved without causing undesired effects on other properties such as:
- viscosity, in particular too high viscosity values have to be prevented thus making it possible to obtain elastomeric compositions with good processability and good extrudability;
- hysteresis (Tan delta values), in particular too high hysteresis values have to be prevented in order to avoid both a too high rolling resistance and, in particular in the case of inner structural elements of a tire, a too high operating temperatures which may lead to a degradation of the elastomeric compositions with a consequent decrease of their mechanical properties and a possible tire failure;
- tear resistance, in particular a decrease in the tear resistance has to be prevented in order to avoid detachments from the other elastomeric compositions present in the tire, in particular during the use of the same.

The Applicant has now found that it is possible to obtain crosslinkable elastomeric compositions that may be advantageously used in the production of crosslinked manufactured products, in particular in the manufacturing of tires, more in particular in the manufacturing of inner structural elements of a tire, by adding to the crosslinkable elastomeric composition at least one layered material in an amount not higher than 50 phr, at least one methylene donor compound and at least one methylene acceptor compound.

The crosslinked elastomeric compositions so obtained show improved mechanical properties (both static and dinamic), said improvement being obtained without observing undesired effects on their remaining properties (i.e. viscosity, hysteresis, tear resistance). Moreover, the combination of a layered material with a methylene donor compound and a methylene acceptor compound shows a synergistic effect, in particular, on both the elastic modulus values (which increase) and the Tan delta values (which decrease) of the crosslinked elastomeric compositions so obtained.

According to a first aspect, the present invention relates to a tire comprising at least one structural element including a crosslinked elastomeric material obtained by crosslinking a crosslinkable elastomeric compositon comprising:
(a) 100 phr of at least one diene elastomeric polymer;
(b) from 1 phr to 50 phr, preferably from 2 phr to 40 phr, more preferably from 5 phr to 30 phr, of at least one layered material having an individual layer thickness of from 0.01 nm to 30 nm, preferably of from 0.05 nm to 15 nm;
(c) from 0.1 phr to 15 phr, preferably from 0.3 phr to 10 phr, of at least one methylene donor compound;
(d) from 0.4 phr to 20 phr, preferably from 0.8 phr to 15 phr, of at least one methylene acceptor compound.

For the purposes of the present description and of the claims which follow, the term "phr" means the parts by weight of a given component of the crosslinkable elastomeric composition per 100 parts by weight of the diene elastomeric polymer.

For the purpose of the present description and of the claims which follow, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

According to one preferred embodiment, the tire comprises:
- a carcass structure of a substantially toroidal shape, having opposite lateral edges associated with respective right-hand and left-hand bead structures, said bead structures comprising at least one bead core and at least one bead filler;
- a belt structure applied in a radially external position with respect to said carcass structure;
- a tread band radially superimposed on said belt structure;
- a pair of sidewalls applied laterally on opposite sides with respect to said carcass structure;
- at least one structural element selected from bead filler, sidewall insert, tread underlayer, tread base, including a crosslinked elastomeric material obtained by crosslinking a crosslinkable elastomeric composition above disclosed.

According to a further preferred embodiment, said sidewall insert extends radially from a position corresponding to the bead structure to a position corresponding to a tread lateral edge. Said sidewall insert is usually used in the case of extended mobility tires such as, for example, run flat tires.

According to a further preferred embodiment, said tread underlayer is a layer of crosslinked elastomeric material applied in a radially internal position with respect to said tread band.

According to a further preferred embodiment, said tread band is of cap and base construction and comprises a radially inner layer or tread base and a radially outer layer or tread cap. Preferably, said radially inner layer or tread base has a thickness of at least 10%, preferably of from 20% to 70%, with respect to the total thickness of the tread band.

Preferably, said structural element has a dynamic elastic modulus (E'), measured at 70°C, not lower than 5 MPa, more preferably of from 8 MPa to 80 MPa.

Preferably, said structural element has a tensile modulus at 100% elongation (100% Modulus) not lower than 3 MPa, preferably of from 4 MPa to 20 MPa.

Preferably, said structural element has a IRHD hardness, measured at 23°C not lower than 65, more preferably of from 70 to 95.

The tensile modulus may be measured according to Standard ISO 37:1994. The dynamic elastic modulus (E') may be measured using an Instron dynamic device in the traction-compression mode. The IRHD hardness may be measured according to Standard ISO 48:1994. Further details regarding the above measurement methods will be given in the examples which follow.

According to a further aspect, the present invention relates to a crosslinkable elastomeric composition comprising:
(a) 100 phr of at least one diene elastomeric polymer;
(b) from 1 phr to 50 phr, preferably from 2 phr to 40 phr, more preferably from 5 phr to 30 phr, of at least one layered material having an individual layer thickness of from 0.01 nm to 30 nm, preferably of from 0.05 nm to 15 nm;
(c) from 0.1 phr to 15 phr, preferably from 0.3 phr to 10 phr, of at least one methylene donor compound;
(d) from 0.4 phr to 20 phr, preferably from 0.8 phr to 15 phr, of at least one methylene acceptor compound.

According to one preferred embodiment, said crosslinkable elastomeric composition may further comprise (e) at least one carbon black reinforcing filler.

According to a further preferred embodiment, said crosslinkable elastomeric composition may further comprise (f) at least one silane coupling agent.

According to a further preferred embodiment, said crosslinkable elastomeric composition may further comprise (g) discontinuous fibres.

According to a further aspect, the present invention relates to a crosslinked manufactured article obtained by crosslinking a crosslinkable elastomeric composition above reported.

According to one preferred embodiment, the diene elastomeric polymer (a) may be selected from those commonly used in sulfur-crosslinkable elastomeric materials, that are particularly suitable for producing tires, that is to say from elastomeric polymers or copolymers with an unsaturated chain having a glass transition temperature (T_{g}) generally below 20°C, preferably in the range of from 0°C to -110°C. These polymers or copolymers may be of natural origin or may be obtained by solution polymerization, emulsion polymerization or gas-phase polymerization of one or more conjugated diolefins, optionally blended with at least one comonomer selected from monovinylarenes and/or polar comonomers in an amount of not more than 60% by weight.

The conjugated diolefins generally contain from 4 to 12, preferably from 4 to 8 carbon atoms, and may be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-butadiene or isoprene are particularly preferred.

Monovinylarenes which may optionally be used as comonomers generally contain from 8 to 20, preferably from 8 to 12 carbon atoms, and may be selected, for example, from: styrene; 1-vinylnaphthalene; 2-vinylnaphthalene; various alkyl, cycloalkyl, aryl, alkylaryl or arylalkyl derivatives of styrene such as, for example, α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Styrene is particularly preferred.

Polar comonomers which may optionally be used may be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile, or mixtures thereof.

Preferably, the diene elastomeric polymer (a) may be selected, for example, from: cis-1,4-polyisoprene (natural or synthetic, preferably natural rubber), 3,4-polyisoprene, polybutadiene (in particular polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

According to one preferred embodiment, said crosslinkable elastomeric composition comprises at least 10% by weight, preferably from 20% by weight to 100% by weight, with respect to the total weight of the at least one diene elastomeric polymer (a), of natural or synthetic cis-1,4-polyisoprene.

The above reported crosslinkable elastomeric composition may optionally comprise at least one elastomeric polymer of one or more monoolefins with an olefinic comonomer or derivatives thereof (a'). The monoolefins may be selected from: ethylene and α-olefins generally containing from 3 to 12 carbon atoms, such as, for example, propylene, 1-butene, 1-pentene, 1-hexene, 1-octene, or mixtures thereof. The following are preferred: copolymers between ethylene and an α-olefin, optionally with a diene; isobutene homopolymers or copolymers thereof with small amounts of a diene, which are optionally at least partially halogenated. The diene optionally present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the following are particularly preferred: ethylene/propylene copolymers (EPR) or ethylene/propylene/diene copolymers (EPDM); polyisobutene; butyl rubbers; halobutyl rubbers, in particular chlorobutyl or bromobutyl rubbers; or mixtures thereof.

A diene elastomeric polymer (a) or an elastomeric polymer (a') functionalized by reaction with suitable terminating agents or coupling agents may also be used. In particular, the diene elastomeric polymers obtained by anionic polymerization in the presence of an organometallic initiator (in particular an organolithium initiator) may be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes (see, for example, European Patent EP 451,604, or United States Patents US 4,742,124 and US 4,550,142).

A diene elastomeric polymer (a) or an elastomeric polymer (a') including at least one functional group selected from carboxylic groups, carboxylate groups, anhydride groups, ester groups, epoxy groups, may also be used.

Preferably, said elastomeric polymers include from 0.05% by weight to 10% by weight, preferably from 0.1% by weight to 5% by weight, with respect to the total weight of the elastomeric polymer of said at least one functional group selected from carboxylic groups, carboxylate groups, anhydride groups, ester groups.

In the case of the epoxy groups, said elastomeric polymers preferably include less than 10 mol%, preferably from 0.1 mol% to 5 mol%, of epoxy groups with respect to the total number of moles of monomers present in the elastomeric polymer.

Said functional group may be introduced into the elastomeric polymers by means of processes known in the art such as, for example, during the production of the elastomeric polymers by co-polymerization with at least one corresponding functionalized monomer containing at least one ethylenic unsaturation; or by subsequent modification of the elastomeric polymers by grafting said at least one functionalized monomer in the presence of a free radical initiator (for example, an organic peroxide).

Preferably, said functional group may be introduced into the elastomeric polymers by means of a process comprising:
- feeding at least one elastomeric polymer and at least one functionalized monomer containing at least one ethylenic unsaturtation into at least one extruder;
- mixing and softening said mixture so as to obtain an elatomeric polymer including at least one functional group; discharge the elastomeric polymer obtained in the above step from said at least one extruder.

Functionalized monomers which may be advantageously used include, for example, monocarboxylic or dicarboxylic acids containing at least one ethylenic unsaturation or derivatives thereof, in particular salts, anhydride or esters.

Examples of monocarboxylic or dicarboxylic acids containing at least one ethylenic unsaturation or derivatives thereof are: maleic acid, fumaric acid, citraconic acid, itaconic acid, acrylic acid, methacrylic acid, and salts, anhydrides or esters derived therefrom, or mixtures thereof. Maleic anhydride is particularly preferred.

With regard to the epoxy groups, the epoxy groups may be introduced during the production of the elastomeric polymers, by co-polymerization with at least one epoxy compound containing at least one ethylenic unsaturation. Examples of epoxy compounds containing at least one ethylenic unsaturation are: glycidyl acrylate, glycidyl methacrylate, itaconic acid monoglyciyl ester, maleic acid glycidyl ester, vinylglycidyl ether, allylglycidyl ether, or mixtures thereof.

Alternatively, it is possible to introduce the epoxy groups by reacting the elastomeric polymers, in solution, with at least one epoxidizing agent. This epoxidizing agent is, generally, a peroxide, a peracid or a derivative thereof, in particular a salt thereof (for example, performic acid, perpropionic acid, peracetic acid, m-chloroperbenzoic acid, metal salts of peroxybenzoic acid such as, for example, magnesium bis(2-carboxylate-monoperoxybenzoic acid)hexahydrate or, alternatively, hydrogen peroxide in the presence of a carboxylic acid or a derivative thereof, in particular anhydrides for example, acetic acid, formic acid, propionic acid, acetic anhydride), optionally mixed with an acid catalyst (for example, sulfuric acid).

Further details regarding processes for epoxidizing elastomeric polymers are disclosed, for example, in United States Patent US 4,341,672 or by Schulz et al. in *"*Rubber Chemistry and Technology", Vol. 55, pages 809 et seq.

Preferably, the epoxy groups may be introduced into the elastomeric polymers by means of a process comprising:
- feeding at least one elastomeric polymer and at least one epoxidizing agent into at least one extruder;
- mixing and softening said mixture obtaining an epoxidized elastomeric polymer;
- discharging the obtained epoxidized elastomeric polymer from said at least one extruder.

Alternatively, the epoxy groups may be introduced into the elastomeric polymers by means of a process comprising:
- feeding at least one elastomeric polymer into at least one extruder; feeding at least one hydrogen peroxide precursor to said at least one extruder;
- feeding at least one carboxylic acid or a derivative thereof to said at least one extruder;
- mixing and reacting, in the presence of water, said at least one elastomeric polymer with said at least one hydrogen peroxide precursor and said at least one carboxylic acid or a derivative thereof, to obtain an epoxidized elastomeric polymer;
- discharging the obtained epoxidized elastomeric polymer from said at least one extruder.

Preferably, the epoxidizing agent may be selected from those above reported.

Preferably, the hydrogen peroxide precursor may be selected, for example, from inorganic persalts (for example, sodium perborate mono- and tetra-hydrate, sodium percarbonate, potassium peroxymonosulfate), metal peroxides (for examples, magnesium peroxide, calcium peroxide, zinc peroxide), hydrogen peroxide adducts (for example, urea/hydrogen peroxide adduct), or mixtures thereof.

Preferably, the carboxylic acid or a derivative thereof may be selected, for example, from acetic acid, acetic anhydride, maleic acid, maleic anhydride, succinic acid, succinic anhydride, phthalic acid, phthalic anhydride, or mixtures thereof.

According to one preferred embodiment, the layered material (b) may be selected, for example, from phyllosilicates such as: smectites, for example, montmorillonite, bentonite, nontronite, beidellite, volkonskoite, hectorite, saponite, sauconite; vermiculite; halloisite; sericite; aluminate oxides; hydrotalcite; or mixtures thereof. Montmorillonite is particularly preferred. These layered material generally contains exchangeable cations such as sodium (Na⁺), calcium (Ca²⁺), potassium (K⁺), or magnesium (Mg²⁺), present at the interlayer surfaces.

In order to render the layered material more compatible with the elastomeric polymers said layered material (b) may be treated with at least one compatibilizing agent. Said compatibilizing agent is capable of undergoing ion exchange reactions with the cations present at the interlayers surfaces of the layerd inorganic material.

According to one preferred embodiment, said compatibilizing agent may be selected, for example, from the quaternary ammonium or phosphonium salts having general formula (I): 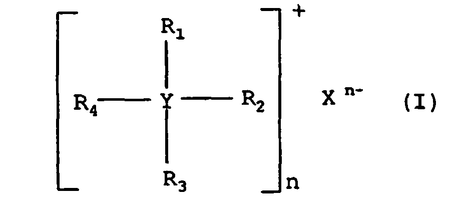 wherein:
- Y represents N or P;
- R₁, R₂, R₃ and R₄, which may be identical or different, represent a linear or branched C₁-C₂₀ alkyl or hydroxyalkyl group; a linear or branched C₁-C₂₀ alkenyl or hydroxyalkenyl group; a group -R₅-SH or -R₅-NH wherein R₅ represents a linear or branched C₁-C₂₀ alkylene group; a C₆-C₁₈ aryl group; a C₇-C₂₀ arylalkyl or alkylaryl group; a C₅-C₁₈ cycloalkyl group, said cycloalkyl group possibly containing hetero atom such as oxygen, nitrogen or sulfur;
- Xⁿ⁻ represents an anion such as the chlorine ion, the sulphate ion or the phosphate ion;
- n represents 1, 2 or 3.

The layered material (b) may be treated with the compatibilizing agent before adding it to the elastomeric polymers. Alternatively, the layered material (b) and the compatibilizing agent may be separately added to the elastomeric polymers.

The treatment of the layered material (b) with the compatibilizing agent may be carried out according to known methods such as, for example, by an ion exchange reaction between the layered material and the compatibilizer: further details are described, for example, in United States Patents US 4,136,103, US 5,747,560, or US 5,952,093.

Example of layered material (b) which may be used according to the present invention and is available commercially is the product known by the name of Dellite^{®} 67G, Dellite^{®} 72T, Dellite^{®} 43B, from Laviosa Chimica Mineraria S.p.A.; Cloisite^{®} 25A, Cloisite^{®} 10A, Cloisite^{®} 15A, Cloisite^{®} 20A, from Southern Clays; Nanofil^{®} 5, Nanofil^{®} 8, Nanofil^{®} 9, from Süd Chemie; Bentonite^{®} AG/3 from Dal Cin S.p.A.

According to one preferred embodiment, the methylene donor compound (c) may be selected, for example, from: hexamethylenetetramine (HMT); hexamethoxymethylmelamine (HMMM); formaldehyde; paraformaldehyde; trioxane; 2-methyl-2-nitro-1-propanal; substituted melamine resins such as N-substituted oxymethylmelamine resins; glycoluril compounds such as tetramethoxymethyl glycoluril; urea-formaldheyde resins such as butylated urea-formaldheyde resins; or mixtures thereof. Hexamethylenetetramine (HMT) or hexamethoxymethylmelamine (HMMM) are particularly preferred.

According to one preferred embodiment, the methylene acceptor compound (d) may be selected, for example, from: resorcinol; catechol; hydroquinone; pyrogallol; phloroglucinol; 1-naphthol; 2-naphthol; phenolic resins obtained from the condensation of an optionally substituted phenol with an aldehyde such as, for example, formaldehyde, acetaldehyde, furfural (for example, resorcinol-formaldehyde resin); or mixtures thereof. Resorcinol is particularly preferred.

Said methylene donor compound (c) and said methylene acceptor compound (d) may also be added to the crosslinkable elastomeric composition in the precondensed form (condensed before being added to said crosslinkable elastomeric composition) such as, resorcinol-formaldeyde resin, substituted melamine resins such as N-substituted oxymethylmelamine resins, or mixtures thereof. Said precondensed resins are able to self-crosslink as they contain different reactive groups.

As disclosed above, said crosslinkable elastomeric composition may further comprise (e) at least one carbon black reinforcing filler.

According to one preferred embodiment, the carbon black reinforcing filler may be selected from those having a surface area of not less than 20 m²/g (determined by CTAB absorption as described in Standard ISO 6810:1995).

According to one preferred embodiment, said carbon black reinforcing filler is present in the crosslinkable elastomeric composition in an amount of from 0 phr to 120 phr, preferably of from 20 phr to 90 phr.

As disclosed above, said crosslinkable elastomeric composition may further comprise (f) at least one silane coupling agent.

According to one preferred embodiment, the silane coupling agent may be selected from those having at least one hydrolizable silane group which may be identified, for example, by the following general formula (II):

(R)₃Si-CₙH₂ₙ-X (II)

wherein the groups R, which may be identical or different, are selected from: alkyl, alkoxy or aryloxy groups or from halogen atoms, on condition that at least one of the groups R is an alkoxy or aryloxy group; n is an integer of from 1 to 6 inclusive; X is a group selected from: nitroso, mercapto, amino, epoxide, vinyl, imide, chloro, -(S)ₘCₙH₂ₙ-Si-(R)₃, or -S-COR, in which m and n are integers of from 1 to 6 inclusive and the groups R are defined as above.

Among the silane coupling agents that are particularly preferred are bis(3-triethoxysilylpropyl)tetrasulphide or bis(3-triethoxysilylpropyl)-disulphide. Said coupling agents may be used as such or as a suitable mixture with an inert filler (for example carbon black) so as to facilitate their incorporation into the elastomeric polymer.

According to one preferred embodiment, said silane coupling agent is present in the elastomeric composition in an amount of from 0 phr to 10 phr, preferably of from 0.5 phr to 5 phr.

As disclosed above, said crosslinkable elastomeric composition may further comprise (g) discontinuous fibres.

According to one preferred embodiment, the discontinuous fibres (g) are aramid fibres, in particular short fibrillated poly(para-phenyleneterephthalamide) fibres (also known as aramid pulp), of the type known commercially as Kevlar^{®} pulp from Du Pont or Twaron^{®} pulp from Teijin Twaron, which are disclosed in United States Patent US 4,871,004 mentioned above. Preferably, the aramid fibres used according to the present invention have a configuration with a main trunk with a length (L) of from 0.2 mm to 0.5 mm, a diameter (D) of from 0.005 mm to 0.02 mm and an aspect ratio L/D of from 10 to 1000, and a plurality of fibrils or small branches which extend outwards from said trunk over the entire length of the trunk and which have a diameter that is substantially smaller than the diameter of said trunk. The surface area of said fibres is of from 4 m²/g to 20 m²/g. The surface area of the aramid fibres according to the present invention is of from 30 to 60 times greater than that of fibres having the same diameter but not comprising fibrils.

According to a preferred embodiment, the abovementioned aramid fibres may be used either as such or in the form of a predispersion in a suitable polymer matrix which serves as a vehicle, consisting of, for example, natural rubber, butadiene/styrene copolymers, ethylene/vinyl acetate copolymers, or mixtures thereof. Preferably, a blend ("masterbatch") in which the abovementioned fibres are dispersed in natural rubber, which is known by the trade name Kevlar^{®} Engineered Elastomer from Du Pont and which is composed of 23% by weight of Kevlar^{®} and 77% by weight of natural rubber, is used.

It should be pointed out that although the discontinuous fibres that are preferred according to the present invention are selected from the aramid fibres described above, said discontinuous fibres may also be selected from: fibres based on other polyamides (for example Nylon), on polyesters, on polyolefins, on polyvinyl alcohol; glass fibres; or natural fibres such as, for example, cellulose or lignine; or mixtures thereof.

According to one preferred embodiment, the discontinuous fibres are present in the crosslinkable elastomeric composition in an amount of from 0 phr to 10 phr, preferably of from 0.5 phr to 6 phr.

At least one additional reinforcing filler may advantageously be added to the above reported crosslinkable elastomeric composition, in an amount generally of from 0 phr to 120 phr, preferably of from 20 phr to 90 phr. The reinforcing filler may be selected from those commonly used for crosslinked manufactured articles, in particular for tires, such as, for example, silica, alumina, aluminosilicates, calcium carbonate, kaolin, or mixtures thereof.

The silica which may be used in the present invention may generally be a pyrogenic silica or, preferably, a precipitated silica, with a BET surface area (measured according to ISO standard 5794/1) of from 50 m²/g to 500 m²/g, preferably of from 70 m²/g to 200 m²/g.

When a reinforcing filler comprising silica is present, the crosslinkable elastomeric composition may advantageously incorporate a further silane coupling agent capable of interacting with silica and of linking it to the elastomeric polymers during the vulcanization. Examples of silane coupling agents which may be used have been already disclosed above.

The crosslinkable elastomeric composition above reported may be vulcanized according to known techniques, in particular with sulfur-based vulcanizing systems commonly used for elastomeric polymers. To this end, in the composition, after one or more steps of thermomechanical processing, a sulfur-based vulcanizing agent is incorporated together with vulcanization accelerators. In the final processing step, the temperature is generally kept below 120°C and preferably below 100°C, so as to avoid any unwanted pre-crosslinking phenomena.

The vulcanizing agent most advantageously used is sulfur, or molecules containing sulfur (sulfur donors), with accelerators and activators known to those skilled in the art.

Activators that are particularly effective are zinc compounds, and in particular ZnO, ZnCO₃, zinc salts of saturated or unsaturated fatty acids containing from 8 to 18 carbon atoms, such as, for example, zinc stearate, which are preferably formed in situ in the elastomeric composition from ZnO and fatty acid, and also BiO, PbO, Pb₃O₄, PbO₂, or mixtures thereof.

Accelerators that are commonly used may be selected from: dithiocarbamates, guanidine, thiourea, thiazoles, sulphenamides, thiurams, amines, xanthates, or mixtures thereof.

Said crosslinkable elastomeric composition may comprise other commonly used additives selected on the basis of the specific application for which the composition is intended. For example, the following may be added to said crosslinkable elastomeric composition: antioxidants, anti-ageing agents, plasticizers, adhesives, anti-ozone agents, modifying resins, fibres (for example Kevlar^{®} pulp), or mixtures thereof.

In particular, for the purpose of further improving the processability, a plasticizer generally selected from mineral oils, vegetable oils, synthetic oils, or mixtures thereof, such as, for example, aromatic oil, naphthenic oil, phthalates, soybean oil, or mixtures thereof, may be added to said crosslinkable elastomeric composition. The amount of plasticizer generally ranges of from 0 phr to 70 phr, preferably of from of 5 phr to 30 phr.

The above reported crosslinkable elastomeric composition may be prepared by mixing together the elastomeric base components and the layered material or a masterbatch thereof, with the reinforcing filler and the other additives optionally present, according to techniques known in the art. The mixing may be carried out, for example, using an open mixer of open-mill type, or an internal mixer of the type with tangential rotors (Banbury) or with interlocking rotors (Intermix), or in continuous mixers of Ko-Kneader type (Buss), or of co-rotating or counter-rotating twinscrew type.

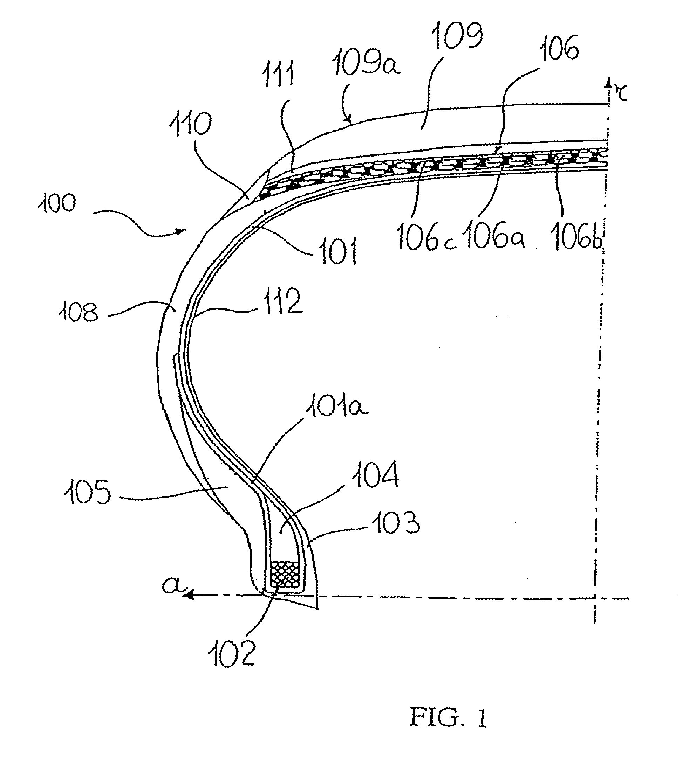

The present invention will now be illustrated in further detail by means of a number of illustrative embodiments, with reference to the attached Fig. 1-4 which are a view in cross section of a portion of a tire made according to the invention.

"a" indicates an axial direction and "r" indicates a radial direction. For simplicity, Fig. 1 shows only a portion of the tire, the remaining portion not represented being identical and symmetrically arranged with respect to the radial direction "r".

The tire (100) comprises at least one carcass ply (101), the opposite lateral edges of which are associated with respective bead structures comprising at least one bead core (102) and at least one bead filler (104). The association between the carcass ply (101) and the bead core (102) is achieved here by folding back the opposite lateral edges of the carcass ply (101) around the bead core (102) so as to form the so-called carcass back-fold (101a) as shown in Fig. 1.

Alternatively, the conventional bead core (102) may be replaced with at least one annular insert formed from rubberized wires arranged in concentric coils (not represented in Fig. 1) (see, for example, European Patent Applications EP 928,680 and EP 928,702). In this case, the carcass ply (101) is not back-folded around said annular inserts, the coupling being provided by a second carcass ply (not represented in Fig. 1) applied externally over the first.

The carcass ply (101) generally consists of a plurality of reinforcing cords arranged parallel to each other and at least partially coated with a layer of a crosslinked elastomeric composition. These reinforcing cords are usually made of textile fibres, for example rayon, nylon or polyethylene terephthalate, or of steel wires stranded together, coated with a metal alloy (for example copper/zinc, zinc/manganese, zinc/molybdenum/cobalt alloys and the like).

The carcass ply (101) is usually of radial type, i.e. it incorporates reinforcing cords arranged in a substantially perpendicular direction relative to a circumferential direction. The core (102) is enclosed in a bead (103), defined along an inner circumferential edge of the tire (100), with which the tire engages on a rim (not represented in Fig. 1) forming part of a vehicle wheel. The space defined by each carcass back-fold (101a) contains a bead filler (104) which may be made according to the present invention, wherein the bead core (102) is embedded. An antiabrasive strip (105) is usually placed in an axially external position relative to the carcass back-fold (101a).

A belt structure (106) is applied along the circumference of the carcass ply (101). In the particular embodiment in Fig. 1, the belt structure (106) comprises two belt strips (106a, 106b) which incorporate a plurality of reinforcing cords, typically metal cords, which are parallel to each other in each strip and intersecting with respect to the adjacent strip, oriented so as to form a predetermined angle relative to a circumferential direction. On the radially outermost belt strip (106b) may optionally be applied at least one zero-degree reinforcing layer (106c), commonly known as a "0° belt", which generally incorporates a plurality of reinforcing cords, typically textile cords, arranged at an angle of a few degrees relative to a circumferential direction, and coated and welded together by means of a crosslinked elastomeric composition.

A side wall (108) is also applied externally onto the carcass ply (101), this side wall extending, in an axially external position, from the bead (103) to the end of the belt structure (106).

A tread band (109), whose lateral edges are connected to the side walls (108), is applied circumferentially in a position radially external to the belt structure (106). Externally, the tread band (109) has a rolling surface (109a) designed to come into contact with the ground. Circumferential grooves which are connected by transverse notches (not represented in Fig. 1) so as to define a plurality of blocks of various shapes and sizes distributed over the rolling surface (109a) are generally made in this surface (109a), which is represented for simplicity in Fig. 1 as being smooth.

A tread underlayer (111) which may be made according to the present invention, is placed between the belt structure (106) and the tread band (109).

As represented in Fig. 1, the tread underlayer (111) may have uniform thickness.

Alternatively, the tread underlayer (111) may have a variable thickness in the transversal direction. For example, the thickness may be greater near its outer edges than at a central zone.

In Fig. 1, said tread underlayer (111) extends over a surface substantially corresponding to the surface of development of said belt structure (106). Alternatively, said tread underlayer (111) extends only along at least one portion of the development of said belt structure (106), for instance at opposite side portions of said belt structure (106) (not represented in Fig. 1).

A strip made of elastomeric material (110), commonly known as a "mini-side wall", may optionally be present in the connecting zone between the side walls (108) and the tread band (109), this mini-side wall generally being obtained by co-extrusion with the tread band and allowing an improvement in the mechanical interaction between the tread band (109) and the side walls (108). Alternatively, the end portion of the side wall (108) directly covers the lateral edge of the tread band (109).

In the case of tubeless tires, a rubber layer (112) generally known as a liner, which provides the necessary impermeability to the inflation air of the tire, may also be provided in an inner position relative to the carcass ply (101).

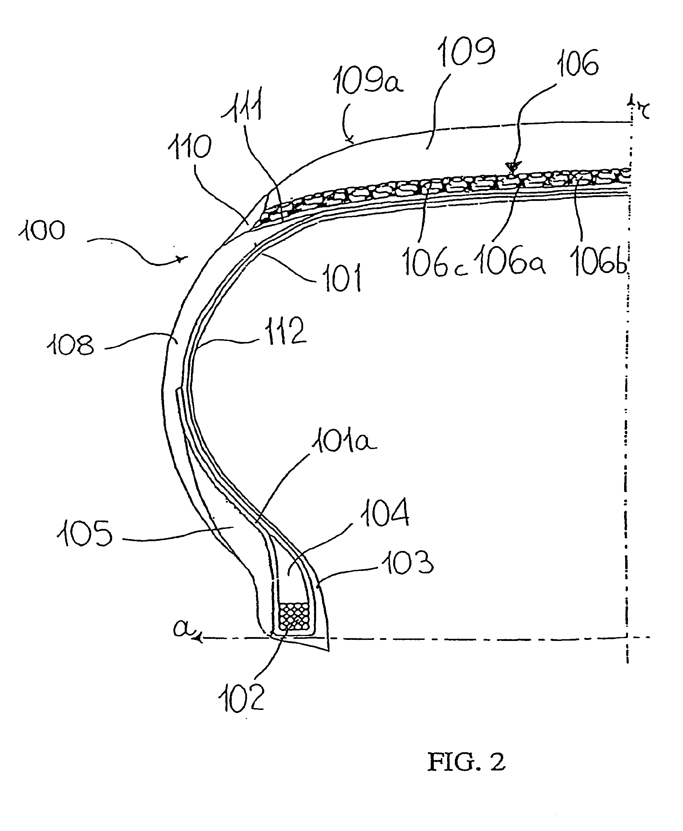

Fig. 2, shows a tire (100) having a structure as described in Fig. 1 where the tread underlayer (111) which may be made according to the present invention, is placed between the belt structure (106) and the carcass ply (101).

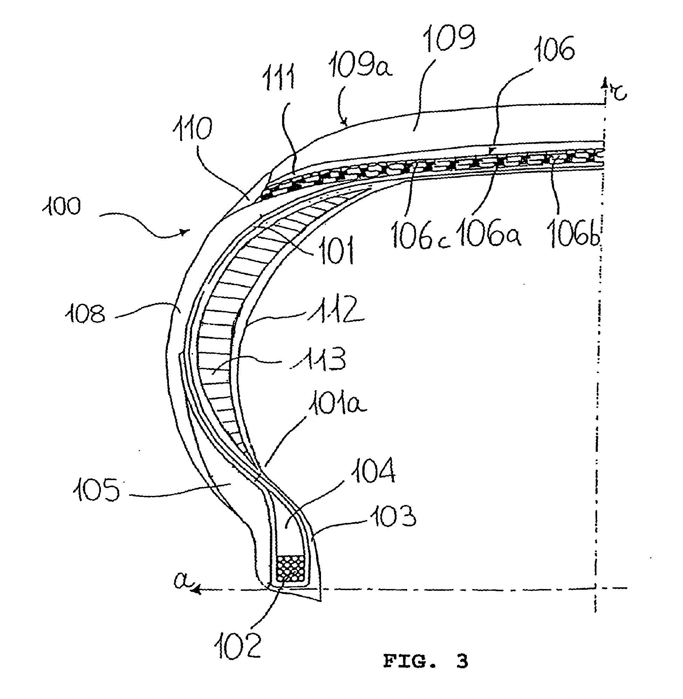

Fig.3, shows a tire (100) having a structure as described in Fig. 1 where a sidewall insert (113) which may be made according to the present invention, which extends radially from a position corresponding to the bead structure to a position corresponding to a tread lateral edge, is placed in an axially internal position with respect to the carcass ply: for example, as represented in Fig. 3, said sidewall insert is placed between the carcass ply (101) and the liner (112). Alternatively, in the case in which more carcass plies are present, a sidewall insert (113) is placed between two of said carcass plies (not represented in Fig. 3.) Alternatively, a sidewall insert is placed beetween the carcass ply and the side wall (not represent in Fig. 3). More than one sidewall insert may be present as disclosed, for example, in United States Patent US 5,238,040 or in European Patent EP 943,466.

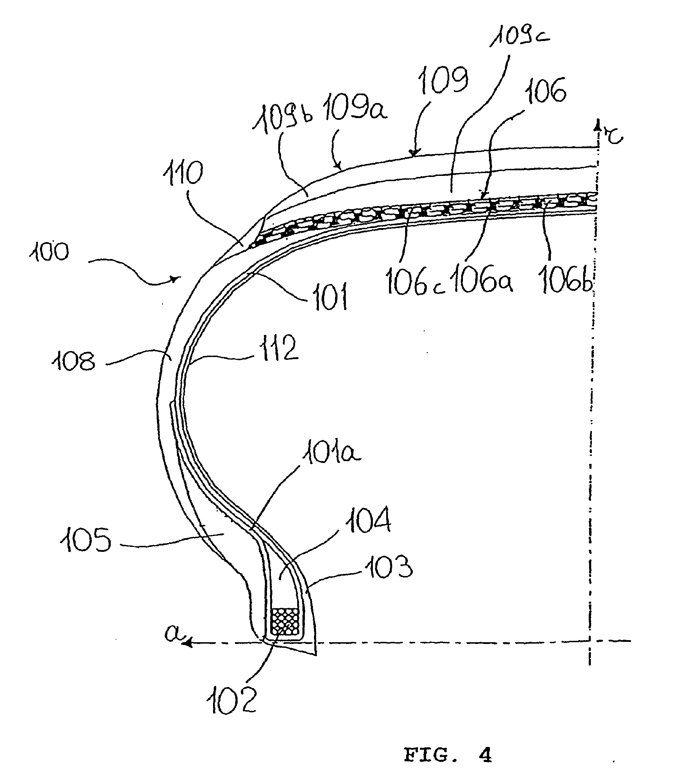

Fig. 4, shows a tire (100) having a structure as described in Fig. 1 where a tread band (109) is of cap and base construction. More in particular, said tread band (109) comprises a radially inner layer or tread base (109c) and a radially outer layer or tread cap (109b): the tread base (109c) may be made according to the present invention.

As represented in Fig. 4, the tread base (109c) has a uniform thickness. In any case, the thickness of the tread base (109c) may also be not uniform but, for example, greater near its outer edges and/or at the central zone thereof.

The process for producing the tire according to the present invention may be carried out according to techniques and using apparatus that are known in the art, as described, for example, in European Patents EP 199,064, and in United States Patents US 4,872,822 or US 4,768,937, said process including at least one stage of manufacturing the crude tire and at least one stage of vulcanizing this tire.

More particularly, the process for producing the tire comprises the steps of preparing, beforehand and separately from each other, a series of semi-finished products corresponding to the various structural elements of the tire (carcass plies, belt structure, bead wires, fillers, sidewalls and tread band) which are then combined together using a suitable manufacturing machine. Next, the subsequent vulcanization step welds the abovementioned semi-finished products together to give a monolithic block, i.e. the finished tire.

The step of preparing the abovementioned semi-finished products will be preceded by a step of preparing and moulding the various crosslikable elastomeric compositions, of which said semi-finished products are made, according to conventional techniques.

The crude tire thus obtained is then passed to the subsequent steps of moulding and vulcanization. To this end, a vulcanization mould is used which is designed to receive the tire being processed inside a moulding cavity having walls which are countermoulded to define the outer surface of the tire when the vulcanization is complete.

Alternative processes for producing a tire or parts of a tire without using semi-finished products are disclosed, for example, in the abovementioned European Patent Applications EP 928,680 and EP 928,702.

According to one preferred embodiment, said structural elements are formed by a plurality of coils of a continuous elongated element. Said elongated element may be produced, for example, by extruding the crosslinkable elastomeric composition above disclosed. Preferably, said structural elements are assembled onto a support.

For the purposes of the present description and of the claims which follow, the term "support" is used to indicate the following devices:
- an auxiliary drum having a cilindrical shape, said auxiliary drum preferably supporting a belt structure;
- a shaping drum having a substantially toroidal configuration, said shaping drum preferably supporting at least one carcass structure with a belt structure assembled thereon;
- a rigid support preferably shaped according to the inner configuration of the tire.

Further details regarding said devices and the methods of forming and/or depositing the structural elements of the tire on a support are described, for example, in International Patent Application WO 01/36185 and in European Patent EP 976,536 in the name of the Applicant, or in European Patent Applications: EP 968,814, EP 1,201,414 and EP 1,211,057.

The crude tire can be moulded by introducing a pressurized fluid into the space defined by the inner surface of the tire, so as to press the outer surface of the crude tire against the walls of the moulding cavity. In one of the moulding methods widely practised, a vulcanization chamber made of elastomeric material, filled with steam and/or another fluid under pressure, is inflated inside the tire closed inside the moulding cavity. In this way, the crude tire is pushed against the inner walls of the moulding cavity, thus obtaining the desired moulding. Alternatively, the moulding may be carried out without an inflatable vulcanization chamber, by providing inside the tire a toroidal metal support shaped according to the configuration of the inner surface of the tire to be obtained as described, for example, in Europen Patent EP 1,189,744.

At this point, the step of vulcanizing the crude tire is carried out. To this end, the outer wall of the vulcanization mould is placed in contact with a heating fluid (generally steam) such that the outer wall reaches a maximum temperature generally of from 100°C to 230°C. Simultaneously, the inner surface of the tire is heated to the vulcanization temperature using the same pressurized fluid used to press the tire against the walls of the moulding cavity, heated to a maximum temperature of from 100°C to 250°C. The time required to obtain a satisfactory degree of vulcanization throughout the mass of the elastomeric material may vary in general of from 3 min to 90 min and depends mainly on the dimensions of the tire. When the vulcanization is complete, the tire is removed from the vulcanization mould.

The present invention will be further illustrated below by means of a number of preparation examples, which are given for purely indicative purposes and without any limitation of this invention.

### EXAMPLES 1-5

### Preparation of the elastomeric compositions

The elastomeric compositions given in Table 1 were prepared as follows (the amounts of the various components are given in phr).

All the components, except sulfur, retardant (PVI), accelerator (DCBS) and hexamethylenetetramine (HMT), were mixed together in an internal mixer (model Pomini PL 1.6) for about 5 min (1^{st} Step). As soon as the temperature reached 145±5°C, the elastomeric material was discharged. The sulfur, retardant (PVI), accelerator (DCBS) and hexamethylenetetramine (HMT), were then added and mixing was carried out in an open roll mixer (2^{nd} Step).

**TABLE 1**

| EXAMPLE | 1 (*) | 2 (*) | 3 (*) | 4 | 5 |
|---|---|---|---|---|---|
| 1^{st} STEP | | | | | |
| NR | 100 | 100 | 100 | 100 | 93.3 |
| N326 | 70 | 60 | 70 | 60 | 60 |
| Zinc oxide | 7 | 7 | 7 | 7 | 7 |
| Stearic acid | 2 | 2 | 2 | 2 | 2 |
| Antioxidant | 2 | 2 | 2 | 2 | 2 |
| X50S^{®} | 1 | 1 | 1 | 1 | 1 |
| Kevlar^{®} | - | - | - | - | 8.7 |
| Dellite^{®} 67G | - | 10 | - | 10 | 10 |
| Resorcinol | - | - | 1.3 | 1.3 | 1.3 |

| 2^{nd} STEP | | | | | |
|---|---|---|---|---|---|
| Sulfur | 3 | 3 | 3 | 3 | 3 |
| PVI | 0.4 | 0.4 | 0.4 | 0.4 | 0.4 |
| DCBS | 1.5 | 1.5 | 1.5 | 1.5 | 1.5 |
| HMT | - | - | 0.8 | 0.8 | 0.8 |

| | | | | | |
|---|---|---|---|---|---|
| (*): comparative. NR: natural rubber; N326: carbon black; Antioxidant: phenyl-p-phenylenediamine; X50S^{®}: silane coupling agent comprising 50% by weight of carbon black and 50% by weight of bis(3-triethoxysilylpropyl) tetrasulphide (Degussa-Hüls - the reported amount relates to the silane amount); Kevlar^{®} Engineered Elastomer: blend of 23% by weight of Kevlar^{®} and 77% by weight of natural rubber (Du Pont); Dellite^{®} 67G: organo-modified montmorillonite belonging to the smectite family (Laviosa Chimica Mineraria S.p.A.); PVI (retardant): N-cyclohexylthiophthalimide (Santogard^{®} PVI - Monsanto); DCBS (accelerator): benzothiazyl-2-dicyclohexyl-sulfenamide (Vulkacit^{®} DZ/EGC - Bayer); HMT: hexamethylenetetramine. | | | | | |

The Mooney viscosity ML(1+4) at 100°C was measured, according to Standard ISO 289-1:1994, on the non-crosslinked elastomeric compositions obtained as described above. The results obtained are given in Table 2.

The static mechanical properties according to Standard ISO 37:1994 as well as hardness in IRHD degrees at 23°C according to ISO standard 48:1994, were measured on samples of the abovementioned elastomeric compositions vulcanized at 170°C for 10 min. The results obtained are given in Table 2.

Table 2 also shows the dynamic mechanical properties, measured using an Instron dynamic device in the traction-compression mode according to the following methods. A test piece of the crosslinked elastomeric composition (vulcanized at 170°C for 10 min) having a cylindrical form (length = 25 mm; diameter = 12 mm), compression-preloaded up to a 10% longitudinal deformation with respect to the initial length, and kept at the prefixed temperature (23°C or 70°C) for the whole duration of the test, was submitted to a dynamic sinusoidal strain having an amplitude of ±3.5% with respect to the length under pre-load, with a 100 Hz frequency. The dynamic mechanical properties are expressed in terms of dynamic elastic modulus (E') and Tan delta (loss factor) values. The Tan delta value is calculated as a ratio between viscous modulus (E") and elastic modulus (E').

In Table 2 the numbers in brackets indicate the % variation (%Δ_{Ref.}) of the reported values with respect to the reference values of Example 1.

**TABLE 2**

| EXAMPLE | 1 (*) | 2 (*) | 3 (*) | 4 | 5 |
|---|---|---|---|---|---|
| Mooney viscosity ML (1+4) | 69 | 63 | 64 | 60 | 64 |

| STATIC MECHANICAL PROPERTIES | | | | | |
|---|---|---|---|---|---|
| 50% Modulus | 1.90 | 2.36 (24.2%) | 2.81 (47.9%) | 3.43 (80.5%) | 5.05 (165.8%) |
| 100% Modulus | 3.76 | 4.39 (16.75%) | 5.48 (45.74%) | 6.04 (60.64%) | 7.45 (98.13%) |
| Stress at break (MPa) | 17.22 | 16.37 (- 4.94%) | 17.47 (1.45%) | 18.70 (8.60%) | 16.60 (- 3.60%) |
| Elongation at break | 371 | 354 (- 4.60%) | 286 (- 22.91%) | 342 (- 7.82) | 290 (- 21.83) |

| DYNAMIC MECHANICAL PROPERTIES | | | | | |
|---|---|---|---|---|---|
| E' (23°C) | 10.59 | 13.52 (27.67%) | 15.90 (50.14) | 23.81 (124.8) | 24.67 (132.9) |
| E' (70°C) | 9.06 | 10.44 (15.23%) | 11.96 (32.0%) | 19.11 (110.9%) | 20.47 (125.9%) |
| Tandelta (23°C) | 0.247 | 0.272 (10.12%) | 0.253 (2.43%) | 0.233 (- 5.66%) | 0.228 (-7.70%) |
| Tandelta (70°C) | 0.159 | 0.192 (20.75%) | 0.172 (8.17%) | 0.166 (4.40%) | 0.160 (0.63%) |
| IRHD Hardness (23°C) | 76 | 79 | 83 | 88 | 91 |
| IRHD Hardness (100°C) | 72 | 73 | 78 | 83 | 88 |

| | | | | | |
|---|---|---|---|---|---|
| (*): comparative. | | | | | |

## Claims

1. Tire comprising at least one structural element including a crosslinked elastomeric material obtained by crosslinking a crosslinkable elastomeric compositon comprising:
(a) 100 phr of at least one diene elastomeric polymer;
(b) from 1 phr to 50 phr of at least one layered material having an individual layer thickness of from 0.01 nm to 30 nm;
(c) from 0.1 phr to 15 phr of at least one methylene donor compound;
(d) from 0.4 phr to 20 phr of at least one methylene acceptor compound.

2. Tire according to claim 1, wherein said crosslinkable elastomeric composition comprises from 2 phr to 40 phr, preferably from 5 phr to 30 phr, of at least one layered material (b).

3. Tire according to claim 1 or 2, wherein said at least one layered material (b) has an individual layer thickness of from 0.05 nm to 15 nm.

4. Tire according to any one of the preceding claims, wherein said crosslinkable elastomeric composition comprises from 0.3 phr to 10 phr of at least one methylene donor compound (c).

5. Tire according to any one of the preceding claims, wherein said crosslinkable elastomeric composition comprises from 0.8 phr to 15 phr of at least one methylene acceptor compound (d).

6. Tire according to claim 1, comprising:
- a carcass structure of a substantially toroidal shape, having opposite lateral edges associated with respective right-hand and left-hand bead structures, said bead structures comprising at least one bead core and at least one bead filler;
- a belt structure applied in a radially external position with respect to said carcass structure;
- a tread band radially superimposed on said belt structure;
- a pair of sidewalls applied laterally on opposite sides with respect to said carcass structure;
- at least one structural element selected from bead filler, sidewall insert, tread underlayer, tread base, obtained by crosslinking a crosslinkable elastomeric composition comprising:
(a) 100 phr of at least one diene elastomeric polymer;
(b) from 1 phr to 50 phr of at least one layered material having an individual layer thickness of from 0.01 nm to 30 nm;
(c) from 0.1 phr to 15 phr of at least one methylene donor compound;
(d) from 0.4 phr to 20 phr at least one methylene acceptor compound.

7. Tire according to claim 6, wherein said crosslinkable elastomeric composition comprises from 2 phr to 40 phr, preferably from 5 phr to 30 phr, of at least one layered material (b).

8. Tire according to claim 6 or 7, wherein said at least one layered material has an individual layer thickness of from 0.05 nm to 15 nm.

9. Tire according to any one of claims 6 to 8, wherein said crosslinkable elastomeric composition comprises from 0.3 phr to 10 phr of at least one methylene donor compound (c).

10. Tire according to any one of claims 6 to 9, wherein said crosslinkable elastomeric composition comprises from 0.8 phr to 15 phr of at least one methylene acceptor compound (d).

11. Tire according to any one of claims 6 to 10, wherein said sidewall insert extends radially from a position corresponding to the bead structure to a position corresponding to a tread lateral edge.

12. Tire according to any one of claims 6 to 11, wherein said tread underlayer is a layer of crosslinked elastomeric composition applied in a radially internal position with respect to said tread band.

13. Tire according to any one of claims 6 to 12, wherein said tread band is of cap and base construction and comprises a radially inner layer or tread base and a radially outer layer or tread cap.

14. Tire according to any one of the preceding claims, wherein said structural element has a dynamic elastic modulus (E'), measured at 70°C, not lower than 5 MPa.

15. Tire according to claim 14, wherein said structural element has a dynamic elastic modulus (E'), measured at 70°C, of from 8 MPa to 80 MPa.

16. Tire according to any one of the preceding claims, wherein said structural element has a tensile modulus at 100% elongation (100% Modulus) not lower than 3 MPa.

17. Tire according to claim 16, wherein said structural element has a tensile modulus at 100% elongation (100% Modulus) of from 4 MPa to 20 MPa.

18. Tire according to any on of the preceding claims, wherein said structural element has a IRHD hardness, measured at 23°C, not lower than 65.

19. Tire according to claim 18, wherein said structural element has a IRHD hardness, measured at 23°C, of from 70 to 95.

20. Tire according to any one of the preceding claims, wherein the diene elastomeric polymer (a) has a glass transition temperature below 20°C.

21. Tire according to claim 20, wherein the diene elastomeric polymer (a) is selected from: natural or synthetic cis-1,4-polyisoprene, 3,4-polyisoprene, polybutadiene, optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

22. Tire according to any one of the preceding claims, wherein the crosslinkable elastomeric composition comprises at least 10% by weight with respect to the total weight of the at least one diene elastomeric polymer (a) of natural or synthetic cis-1,4-polyisoprene.

23. Tire according to claim 22, wherein the crosslinkable elastomeric composition comprises from 20% by weight to 100% by weight with respect to the total weight of the at least one diene elastomeric polymer (a) of of natural or synthetic cis-1,4-polyisoprene.

24. Tire according to any one of the preceding claims, wherein the crosslinkable elastomeric composition further comprises at least one elastomeric polymer of one or more monoolefins with an olefinic comonomer or derivatives thereof (a').

25. Tire according to claim 24, wherein the elastomeric polymer (a') is selected from: ethylene/propylene copolymers (EPR) or ethylene/propylene/diene copolymers (EPDM); polyisobutene; butyl rubbers; halobutyl rubbers; or mixtures thereof.

26. Tire according to any one of claims 20 to 25, wherein the diene elastomeric polymer (a) or the elastomeric polymer (a') include at least one functional group selected from carboxylic groups, carboxylate groups, anhydride groups, ester groups, epoxy groups.

27. Tire according to any one of the preceding claim, wherein said layered material (b) is selected from phyllosilicates such as: smectites such as, montmorillonite, bentonite, nontronite, beidellite, volkonskoite, laponite, hectorite, saponite, sauconite, magadite, kenyasite, stevensite; vermiculite; halloisite; sericite; aluminate oxides; hydrotalcite; or mixtures thereof.

28. Tire according to claim 27, wherein said layered material (b) is montmorillonite.

29. Tire according to any one of the preceding claims, wherein said layered material (b) is treated with a compatibilizing agent.

30. Tire according to claim 29, wherein said compatibilizing agent is selected from the quaternary ammonium or phosphonium salts having general formula (I): 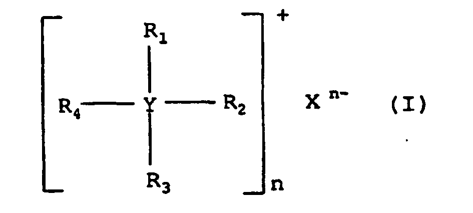 wherein:
- Y represents N or P;
- R₁, R₂, R₃ and R₄, which may be identical or different, represent a linear or branched C₁-C₂₀ alkyl or hydroxyalkyl group; a linear or branched C₁-C₂₀ alkenyl or hydroxyalkenyl group; a group -R₅-SH or -R₅-NH₂, wherein R₅ represents a linear or branched C₁-C₂₀ alkylene group; a C₆-C₁₈ aryl group; a C₇-C₂₀ arylalkyl or alkylaryl group; a C₅-C₁₈ cycloalkyl group, said cycloalkyl group possibly containing hetero atom such as oxygen, nitrogen or sulfur;
- Xⁿ⁻ represents an anion such as the chlorine ion, the sulphate ion or the phosphate ion;
- n represents 1, 2 or 3.

31. Tire according to any one of the preceding claims, wherein the methylene donor compound (c) is selected from: hexamethylenetetramine (HMT); hexamethoxymethylmelamine (HMMM); formaldehyde; paraformaldehyde; trioxane; 2-methyl-2-nitro-1-propanal; substituted melamine resins such as N-substituted oxymethylmelamine resins; glycoluril compounds such as tetramethoxymethyl glycoluril; urea-formaldehyde resins such as butylated urea-formaldheyde resins; or mixtures thereof.

32. Tire according to claim 31, wherein the methylene donor compound (c) is hexamethylenetetramine (HMT) or hexamethoxymethylmelamine (HMMM).

33. Tire according to any one of the preceding claims, wherein the methylene acceptor compound (d) is selected from: resorcinol; catechol; hydroquinone; pyrogallol; phloroglucinol; 1-naphthol; 2-naphthol; phenolic resins obtained from the condensation of an optionally substituted phenol with an aldehyde such as formaldehyde, acetaldehyde, furfural; or mixtures thereof.

34. Tire according to claim 33, wherein the methylene acceptor compound (d) is resorcinol.

35. Tire according to any one of the preceding claims, wherein said methylene donor compound (c) and said methylene acceptor compound (d) are added to the crosslinkable elastomeric composition in the precondensed form

36. Tire according to any one of the preceding claims, wherein said crosslinkable elastomeric composition comprises from 0 phr to 120 phr of (e) at least one carbon black reinforcing filler.

37. Tire according to claim 36, wherein said crosslinkable elastomeric composition comprises from 20 phr to 90 phr of (e) at least one carbon black reinforcing filler.

38. Tire according to any one of the preceding claims, wherein said crosslinkable elastomeric composition comprises (f) at least one silane coupling agent.

39. Tire according to claim 38, wherein said silane coupling agent (f) is selected from those having at least one hydrolizable silane group which may be identified by the following general formula (II):
(R)₃Si-CₙH₂ₙ-X (II)
wherein the groups R, which may be identical or different, are selected from: alkyl, alkoxy or aryloxy groups or from halogen atoms, on condition that at least one of the groups R is an alkoxy or aryloxy group; n is an integer of from 1 to 6 inclusive; X is a group selected from: nitroso, mercapto, amino, epoxide, vinyl, imide, chloro, -(S)ₘCₙH₂ₙ-Si-(R)₃ or -S-COR in which m and n are integers of from 1 to 6 inclusive and the groups R are defined as above.

40. Tire according to claim 38 or 39, wherein said silane coupling agent (f) is present in the crosslinkable elastomeric composition in an amount of from 0 phr to 10 phr.

41. Tire according to claim 40, wherein said silane coupling agent (f) is present in the crosslinkable elastomeric composition in an amount of from 0.5 phr to 5 phr.

42. Tire according to any one of the preceding claims, wherein said crosslinkable elastomeric composition comprises discontinuous fibres (g).

43. Tire according to claim 42, wherein said discontinuous fibres (g) are aramid fibres.

44. Tire according to claim 43, wherein said aramid fibres are short fibrillated poly (paraphenyleneterephthalamide) fibres.

45. Tire according to claim 43 or 44, wherein said aramid fibres are predispersed in a polymer matrix selected from: natural rubber, butadiene/styrene copolymers, ethylene/vinyl acetate copolymers.

46. Tire according to claim 45, wherein said polymer matrix is natural rubber.

47. Tire according to claim 42, wherein said discontinuous fibres (g) are selected from: fibres based on other polyamides, on polyesters, on polyolefins, on polyvinyl alcohol; glass fibres; natural fibres such as cellulose, lignine; or mixtures thereof.

48. Tire according to any one of claims 42 to 47, wherein said discontinuous fibres (g) are present in the crosslinkable elastomeric composition in an amount of from 0 phr to 10 phr.

49. Tire according to claim 48, wherein said discontinuous fibres (g) are present in an amount of from 0.5 phr to 6 phr.

50. Tire according to any one of the preceding claims, wherein at least one additional reinforcing filler is present in said crosslinkable elastomeric composition in an amount of from 0 phr to 120 phr.

51. Tire according to claim 50, wherein said additional reinforcing filler is silica.

52. Tire according to claim 51, wherein at least one further silane coupling agent (f) according to claim 39 is present.

53. Crosslinkable elastomeric composition comprising:
(a) at least one diene elastomeric polymer;
(b) from 1 phr to 50 phr of at least one layered material having an individual layer thickness of from 0.01 nm to 30 nm.
(c) from 0.1 phr to 15 phr of at least one methylene donor compound;
(d) from 0.4 phr to 20 phr of at least one methylene acceptor compound.

54. Crosslinkable elastomeric composition according to claim 53, comprising from 2 phr to 40 phr, preferably from 5 phr to 30 phr, of at least one layered material (b).

55. Crosslinkable elastomeric composition according to claim 53 or 54, wherein said at least one layered material (b) has an individual layer thickness of from 0.05 nm to 15 nm.

56. Crosslinkable elastomeric composition according to any one of claims 53 to 55, wherein said crosslinkable elastomeric composition comprises from 0.3 phr to 10 phr of at least one methylene donor compound (c).

57. Crosslinkable elastomeric composition according to any one of claims 53 to 56, wherein said crosslinkable elastomeric composition comprises from 0.8 phr to 15 phr of at least one methylene acceptor compound (d).

58. Crosslinkable elastomeric composition according to any one of claims 53 to 57, wherein said diene elastomeric polymer (a) is defined according to any one of claims 20 to 23.

59. Crosslinkable elastomeric composition according to any one of claims 53 to 58, further comprising at least one elastomeric polymer (a') which is defined according to claim 24 or 25.

60. Crosslinkable elastomeric composition according to claim 58 or 59, wherein the diene elastomeric polymer (a) or the elastomeric polymer (a') include at least one functional group selected from carboxylic groups, carboxylate groups, anhydride groups, ester groups, epoxy groups.

61. Crosslinkable elastomeric composition according to any one of claims 53 to 60, wherein said layered material is defined according to any one of claims 27 to 30.

62. Crosslinkable elastomeric composition according to any one of claims 53 to 61, wherein said methylene donor compound (c) is defined according to claim 31 or 32.

63. Crosslinkable elastomeric composition according to any one of claims 53 to 62, wherein said methylene donor acceptor (d) is defined according to claims 33 or 34.

64. Crosslinkable elastomeric composition according to any one of claims 53 to 63, wherein said methylene donor compound (c) and said methylene acceptor compound (d) are added in the precondensed form.

65. Crosslinkable elastomeric composition according to any one of claims 53 to 64, wherein said crosslinkable elastomeric composition comprises at least one carbon black defined according to claim 36 or 37.

66. Crosslinkable elastomeric composition according to any one of claims 53 to 65, wherein said crosslinkable elastomeric composition comprises at least one silane coupling agent (f) defined according to any one of claims 39 to 41.

67. Crosslinkable elastomeric composition according to any one of claims 53 to 66, wherein at least one additional reinforcing filler is present in an amount of from 0 phr to 120 phr.

68. Crosslinkable elastomeric composition according to claim 67, wherein the additional reinforcing filler is silica.

69. Crosslinkable elastomeric composition according to claim 68, wherein at least one silane coupling agent (f) defined according to any one of claims 39 to 41 is present.

70. Crosslinkable elastomeric composition according to any one of claims 53 to 69, further comprising discontinuous fibres (g) defined according to any one of claims 43 to 49.

71. Crosslinked manufactured article obtained by crosslinking a crosslinkable elastomeric composition defined according to any one of claims 53 to 70.

## Patentansprüche

1. Reifen mit wenigstens einem Bauelement, das ein vernetztes elastomeres Material aufweist, welches durch Vernetzen einer vernetzbaren elastomeren Mischung erhalten wird, die
(a) 100 phr von wenigstens einem elastomeren Dienpolymer,
(b) 1 phr bis 50 phr von wenigstens einem geschichteten Material mit einer individuellen Schichtdicke von 0,01 nm bis 30 nm,
(c) 0,1 phr bis 15 phr von wenigstens einer Methylendonatorverbindung und
(d) 0,4 phr bis 20 phr von wenigstens einer Methylenakzeptorverbindung aufweist.

2. Reifen nach Anspruch 1, bei welchem die vemetzbare elastomere Mischung 2 phr bis 40 phr, vorzugsweise 5 phr bis 30 phr, von wenigstens einem geschichteten Material (b) aufweist.

3. Reifen nach Anspruch 1 oder 2, bei welchem das wenigstens eine geschichtete Material (b) eine individuelle Schichtdicke von 0,05 nm bis 15 nm hat.

4. Reifen nach einem der vorhergehenden Ansprüche, bei welchem die vemetzbare elastomere Mischung 0,3 phr bis 10 phr von wenigstens einer Methylendonatorverbindung (c) aufweist.

5. Reifen nach einem der vorhergehenden Ansprüche, bei welchem die vernetzbare elastomere Mischung 0,8 phr bis 15 phr von wenigstens einer Methylenakzeptorverbindung (d) aufweist.

6. Reifen nach Anspruch 1,
- mit einem Karkassenaufbau im Wesentlichen mit einer Torusform, dessen gegenüberliegende Seitenränder mit jeweiligen freiliegenden rechten und linken Wulstaufbauten verbunden sind, die wenigstens einen Wulstkern und wenigstens einen Wulstfüller aufweisen,
- mit einem Gurtaufbau, der in einer radial äußeren Position bezüglich des Karkassenaufbaus angebracht ist,
- mit einem Laufflächenband, das radial auf den Gurtaufbau aufgelegt angeordnet ist,
- mit einem Paar von Seitenwänden, die seitlich an gegenüberliegenden Seiten bezüglich des Karkassenaufbaus angebracht sind, und
- mit wenigstens einem aus Wulstfüller, Seitenwandeinlage, Laufflächenunterschicht, Laufflächenbasis ausgewählten Bauelement, das durch Vernetzen einer vernetzbaren elastomeren Mischung erhalten wird, die
(a) 100 phr von wenigstens einem elastomeren Dienpolymer,
(b) 1 phr bis 50 phr von wenigstens einem geschichteten Material, das eine individuelle Schichtdicke von 0,01 nm bis 30 nm hat,
(c) 0,1 phr bis 15 phr von wenigstens einer Methylendonatorverbindung und
(d) 0,4 phr bis 20 phr von wenigstens einer Methylenakzeptorverbindung aufweist.

7. Reifen nach Anspruch 6, bei welchem die vernetzbare elastomere Mischung 2 phr bis 40 phr, vorzugsweise 5 phr bis 30 phr, von wenigstens einem geschichteten Material (b) aufweist.

8. Reifen nach Anspruch 6 oder 7, bei welchem das wenigstens eine geschichtete Material eine individuelle Schichtdicke von 0,05 nm bis 15 nm hat.

9. Reifen nach einem der Ansprüche 6 bis 8, bei welchem die vemetzbare elastomere Mischung 0,3 phr bis 10 phr von wenigstens einer Methylendonatorverbindung (c) aufweist.

10. Reifen nach einem der Ansprüche 6 bis 9, bei welchem die vernetzbare elastomere Mischung 0,8 phr bis 15 phr von wenigstens einer Methylenakzeptorverbindung (d) aufweist.

11. Reifen nach einem der Ansprüche 6 bis 10, bei welchem die Seitenwandeinlage sich radial von einer dem Wulstaufbau entsprechenden Position aus zu einer einem Laufflächenseitenrand entsprechenden Position erstreckt.

12. Reifen nach einem der Ansprüche 6 bis 11, bei welchem die Laufflächenunterschicht eine Schicht aus einer vernetzten elastomeren Mischung ist, die in einer radial inneren Position bezüglich des Laufflächenbandes angebracht ist.

13. Reifen nach einem der Ansprüche 6 bis 12, bei welchem das Laufflächenband einen Kappen-Basis-Aufbau mit einer radial inneren Schicht oder Laufflächenbasis und einer radial äußeren Schicht oder Laufflächenkappe hat.

14. Reifen nach einem der vorhergehenden Ansprüche, bei welchem das Bauelement einen dynamischen Elastizitätsmodul (E') gemessen bei 70°C von nicht weniger als 5 MPa hat.

15. Reifen nach Anspruch 14, bei welchem das Bauelement einen dynamischen Elastizitätsmodul (E') gemessen bei 70°C von 8 MPa bis 80 MPa hat.

16. Reifen nach einem der vorhergehenden Ansprüche, bei welchem das Bauelement einen Zugmodul bei 100% Dehnung (100% Modul) von nicht weniger als 3 MPa hat.

17. Reifen nach Anspruch 16, bei welchem das Bauelement einen Zugmodul bei 100% Dehnung (100% Modul) von 4 MPa bis 20 MPa hat.

18. Reifen nach einem der vorhergehenden Ansprüche, bei welchem das Bauelement eine bei 23°C gemessene IRHD-Härte von nicht weniger als 65 hat.

19. Reifen nach Anspruch 18, bei welchem das Bauelement eine bei 23°C gemessene IRHD-Härte von 70 bis 95 hat.

20. Reifen nach einem der vorhergehenden Ansprüche, bei welchem das elastomere Dienpolymer (a) eine Glasübergangstemperatur unter 20°C hat.

21. Reifen nach Anspruch 20, bei welchem das elastomere Dienpolymer (a) ausgewählt wird aus natürlichem oder synthetischem Cis-1,4-Polyisopren; 3,4-Polyisopren; Polybutadien; fakultativ halogenierten Isopren/Isobuten-Copolymeren; 1,3-Butadien/Acrylnitril-Copolymeren; Styrol/1,3-Butadien-Copolymeren; Styrol/Isopren/1,3-Butadien-Copolymeren; Styrol/1,3-Butadien/Acrylnitril-Copolymeren oder Mischungen davon.

22. Reifen nach einem der vorhergehenden Ansprüche, bei welchem die vemetzbare elastomere Mischung wenigstens 10 Gew.-% von natürlichem oder synthetischem Cis-1,4-Polyisopren bezogen auf das Gesamtgewicht des wenigstens einen elastomeren Dienpolymers (a) aufweist.

23. Reifen nach Anspruch 22, bei welchem die vemetzbare elastomere Mischung 20 Gew.-% bis 100 Gew.-% des natürlichen oder synthetischen Cis-1,4-Polyisoprens bezogen auf das Gesamtgewicht des wenigstens einen elastomeren Dienpolymers (a) aufweist.

24. Reifen nach einem der vorhergehenden Ansprüche, bei welchem die vernetzbare elastomere Mischung weiterhin wenigstens ein elastomeres Polymer (a') von einem oder mehreren Monoolefinen mit einem olefinischen Comonomer oder Derivaten davon aufweist.

25. Reifen nach Anspruch 24, bei welchem das elastomere Polymer (a') ausgewählt wird aus Ethylen/Propylen-Copolymeren (EPR) oder Ethylen/Propylen/Dien-Copolymeren (EPDM); Polyisobuten; Butylkautschuken; Halogenbutylkautschuken oder Mischungen davon.

26. Reifen nach einem der Ansprüche 20 bis 25, bei welchem das elastomere Dienpolymer (a) oder das elastomere Polymer (a') wenigstens eine funktionelle Gruppe aufweist, die aus Carboxylgruppen, Carboxylatgruppen, Anhydridgruppen, Estergruppen, Epoxygruppen ausgewählt wird.

27. Reifen nach irgendeinem vorhergehenden Anspruch, bei welchem das geschichtete Material (b) aus Phyllosilicaten ausgewählt wird, wie Smektonen, beispielsweise Montmorillonit, Bentonit, Nontronit, Beidellit, Volkonskoit, Laponit, Hectorit, Saponit, Sauconit, Magadit, Kenyasit, Stevensit; Vermiculit; Halloisit; Sericit; Aluminatoxiden; Hydrotalcit oder Mischungen davon.

28. Reifen nach Anspruch 27, bei welchem das geschichtete Material (b) Montmorillonit ist.

29. Reifen nach einem der vorhergehenden Ansprüche, bei welchem das geschichtete Material (b) mit einem kompatibilisierenden Mittel behandelt ist.

30. Reifen nach Anspruch 29, bei welchem das kompatibilisierende Mittel ausgewählt wird aus quaternärem Ammonium- oder Phosphoniumsalzen mit der allgemeinen Formel (I): 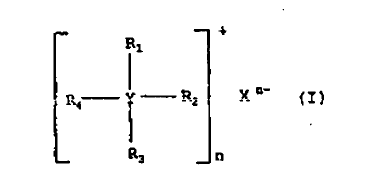 wobei
- Y für N oder P steht,
- R₁, R₂, R₃ und R₄, die identisch oder voneinander verschieden sein können, eine lineare oder verzweigte C₁-C₂₀-Alkyl- oder -Hydroxyalkylgruppe; eine lineare oder verzweigte C₁-C₂₀-Alkenyl- oder -Hydroalkenylgruppe; eine Gruppe -R₅-SH oder -R₅-NH₂, bei der R₅ eine lineare oder verzweigte C₁-C₂₀-Alkylengruppe ist; eine C₆-C₁₈-Arylgruppe; eine C₇-C₂₀-Arylalkyl- oder -Alkylarylgruppe; eine C₅-C₁₈-Cycloalkylgruppe darstellt, die ein Heteroatom, wie Sauerstoff, Stickstoff oder Schwefel enthalten kann;
- Xⁿ⁻ ein Anion darstellt, beispielsweise das Chlorion, das Sulphation oder das Phosphation; und
- n 1, 2 oder 3 darstellt.

31. Reifen nach einem der vorhergehenden Ansprüche, bei welchem die Methylendonatorverbindung (c) ausgewählt wird aus Hexamethylentetramin (HMT); Hexamethoxymethylmelamin (HMMM); Formaldehyd; Paraformaldehyd; Trioxan; 2-Methyl-2-nitro-1-propanol; substituierte Melaminharze, wie N-substituierte Oxymethylmelaminharze; Glycolurilverbindungen, wie Tetramethoxymethylglycoluril; Harnstoffformaldehydharze, wie butylierte Harnstoffformaldehydharze, oder Mischungen davon.

32. Reifen nach Anspruch 31, bei welchem die Methylendonatorverbindung (c) Hexamethylentetramin (HMT) oder Hexamethoxymethylmelamin (HMMM) ist.

33. Reifen nach einem der vorhergehenden Ansprüche, bei welchem die Methylenakzeptorverbindung (d) ausgewählt wird aus Resorcinol; Catechol; Hydrochinon; Pyrogallol; Phloroglucinol; 1-Naphthol; 2-Naphthol; aus der Kondensation eines wahlweise substituierten Phenols mit einem Aldehyd, wie Formaldehyd, Acetaldehyd, Furfural enthaltende Phenolharze oder Mischungen davon.

34. Reifen nach Anspruch 33, bei welchem die Methylenakzeptorverbindung (d) Resorcinol ist.

35. Reifen nach einem der vorhergehenden Ansprüche, bei welchem die Methylendonatorverbindung (c) und die Methylenakzeptorverbindung (d) der vernetzbaren elastomeren Mischung in vorkondensierter Form zugegeben werden.

36. Reifen nach einem der vorhergehenden Ansprüche, bei welchem die vernetzbare elastomere Mischung (e) 0 phr bis 120 phr von wenigstens einem verstärkenden Rußfüllstoff aufweist.

37. Reifen nach Anspruch 36, bei welchem die vernetzbare elastomere Mischung 20 phr bis 90 phr des wenigstens einen verstärkenden Rußfüllstoffs (e) aufweist.

38. Reifen nach einem der vorhergehenden Ansprüche, bei welchem die vernetzbare elastomere Mischung (f) wenigstens ein Silanhaftmittel aufweist.

39. Reifen nach Anspruch 38, bei welchem das Silanhaftmittel (f) aus denjenigen ausgewählt wird, die wenigstens eine hydrolisierbare Silangruppe aufweisen, die durch die folgende allgemeine Formel (II) **gekennzeichnet** werden kann:
(R)₃Si-CₙH₂ₙ-X (II),
wobei die Gruppen R, die identisch oder voneinander verschieden sein können, ausgewählt werden aus Alkyl-, Alkoxy- oder Aryloxygruppen oder aus Halogenatomen unter der Bedingung, dass wenigstens eine der Gruppen R eine Alkoxy- oder Aryloxygruppe ist; n eine ganze Zahl von 1 bis einschließlich 6 ist; und X eine Gruppe ist, die ausgewählt wird aus Nitroso, Mercapto, Amino, Epoxid, Vinyl, Imid, Chlor, - (S)ₘCₙH₂ₙ-Si-(R)₃ oder -S-COR, wobei m und n ganze Zahlen von 1 bis einschließlich 6 sind und die Gruppen R wie vorstehend definiert werden.

40. Reifen nach Anspruch 38 oder 39, bei welchem das Silanhaftmittel (f) in der vernetzbaren elastomeren Mischung in einer Menge von 0 phr bis 10 phr vorhanden ist.

41. Reifen nach Anspruch 40, bei welchem das Silanhaftmittel (f) in der vernetzbaren elastomeren Mischung in einer Menge von 0,5 phr bis 5 phr vorhanden ist.

42. Reifen nach einem der vorhergehenden Ansprüche, bei welchem die vernetzbare elastomere Mischung (g) endliche Fasern aufweist.

43. Reifen nach Anspruch 42, bei welchem die endlichen Fasern (g) Aramidfasern sind.

44. Reifen nach Anspruch 43, bei welchem die Aramidfasern kurze Poly(paraphenylenterephthalamid)-Faserfibrillen sind.

45. Reifen nach Anspruch 43 oder 44, bei welchem die Aramidfasern in einer Polymermatrix vordispergiert sind, die ausgewählt wird aus Naturkautschuk, Butadien/Styrol-Copolymeren, Ethylen/Vinylacetat-Copolymeren.

46. Reifen nach Anspruch 45, bei welchem die Polymermatrix Naturkautschuk ist.

47. Reifen nach Anspruch 42, bei welchem die endlichen Fasern (g) ausgewählt werden aus auf anderen Polymiden, auf Polyestern, auf Polyolefinen, auf Polyvinylalkohol basierenden Fasern; Glasfasern; natürlichen Fasern, wie Cellulose- oder Holzfasern; oder Mischungen davon.

48. Reifen nach einem der Ansprüche 42 bis 47, bei welchem die endlichen Fasern (g) in der vernetzbaren elastomeren Mischung in einer Menge von 0 phr bis 10 phr vorhanden sind.

49. Reifen nach Anspruch 48, bei welchem die endlichen Fasern (g) in einer Menge von 0,5 phr bis 6 phr vorhanden sind.

50. Reifen nach einem der vorhergehenden Ansprüche, bei welchem wenigstens ein zusätzlicher verstärkender Füllstoff in der vernetzbaren elastomeren Mischung in einer Menge von 0 phr bis 120 phr vorhanden ist.

51. Reifen nach Anspruch 50, bei welchem der zusätzliche verstärkende Füllstoff Siliciumdioxid ist.

52. Reifen nach Anspruch 51, bei welchem wenigstens ein Silanhaftmittel (f) nach Anspruch 39 vorhanden ist.

53. Vernetzbare elastomere Mischung mit
(a) wenigstens einem elastomeren Dienpolymer;
(b) 1 phr bis 50 phr von wenigstens einem geschichtetem Material, das eine individuelle Schichtdicke von 0,01 nm bis 30 nm hat;
(c) 0,1 phr bis 15 phr von wenigstens einer Methylendonatorverbindung und
(d) 0,4 phr bis 20 phr von wenigstens einer Methylenakzeptorverbindung.

54. Vemetzbare elastomere Mischung nach Anspruch 53 mit 2 phr bis 40 phr, vorzugsweise 5 phr bis 30 phr, von wenigstens einem geschichtetem Material (b).

55. Vemetzbare elastomere Mischung nach Anspruch 53 oder 54, bei welcher das wenigstens eine geschichtete Material (b) eine individuelle Schichtdicke von 0,05 nm bis 15 nm hat.

56. Vemetzbare elastomere Mischung nach einem der Ansprüche 53 bis 55, die 0,3 phr bis 10 phr von wenigstens einer Methylendonatorverbindung (c) aufweist.

57. Vernetzbare elastomere Mischung nach einem der Ansprüche 53 bis 56, die 0,8 phr bis 15 phr von wenigstens einer Methylenakzeptorverbindung (d) aufweist.

58. Vemetzbare elastomere Mischung nach einem der Ansprüche 53 bis 57, bei welcher das elastomere Dienpolymer (a) nach einem der Ansprüche 20 bis 23 definiert ist.

59. Vernetzbare elastomere Mischung nach einem der Ansprüche 53 bis 58, welche weiterhin wenigstens ein elastomeres Polymer (a') aufweist, das in Anspruch 24 oder 25 definiert ist.

60. Vemetzbare elastomere Mischung nach Anspruch 58 oder 59, bei welcher das elastomere Dienpolymer (a) oder das elastomere Polymer (a') wenigstens eine funktionelle Gruppe aufweist, die aus Carboxylgruppen, Carboxylatgruppen, Anhydridgruppen, Estergruppen oder Epoxygruppen ausgewählt wird.

61. Vemetzbare elastomere Mischung nach einem der Ansprüche 53 bis 60, bei welcher das geschichtete Material (b) nach einem der Ansprüche 27 bis 30 definiert ist.

62. Vernetzbare elastomere Mischung nach einem der Ansprüche 53 bis 61, bei welcher die Methylendonatorverbindung (c) nach Anspruch 31 oder 32 definiert ist.

63. Vernetzbare elastomere Mischung nach einem der Ansprüche 53 bis 62, bei welcher der Methylendonatorakzeptor (d) nach Anspruch 33 oder 34 definiert ist.

64. Vernetzbare elastomere Mischung nach einem der Ansprüche 53 bis 63, bei welcher die Methylendonatorverbindung (c) und die Methylenakzeptorverbindung (d) in der vorkondensierten Form zugegeben werden.

65. Vernetzbare elastomere Mischung nach einem der Ansprüche 53 bis 64, die wenigstens einen Ruß aufweist, der nach Anspruch 36 oder 37 definiert ist.

66. Vernetzbare elastomere Mischung nach einem der Ansprüche 53 bis 65, die wenigstens ein Silanhaftmittel (f) aufweist, das nach einem der Ansprüche 39 bis 41 definiert ist.

67. Vernetzbare elastomere Mischung nach einem der Ansprüche 53 bis 66, bei welcher wenigstens ein zusätzlicher verstärkender Füllstoff in einer Menge von 0 phr bis 120 phr vorhanden ist.

68. Vernetzbare elastomere Mischung nach Anspruch 67, bei welcher der zusätzliche verstärkende Füllstoff Siliciumdioxid ist.

69. Vernetzbare elastomere Mischung nach Anspruch 68, bei welcher wenigstens ein Silanhaftmittel (f) vorhanden ist, das nach einem der Ansprüche 39 bis 41 definiert ist.

70. Vernetzbare elastomere Mischung nach einem der Ansprüche 53 bis 69, welche weiterhin endliche Fasern (g) aufweist, die nach einem der Ansprüche 43 bis 49 definiert sind.

71. Vernetzter gefertigter Gegenstand erhalten durch Vernetzen einer vernetzbaren elastomeren Mischung, die nach einem der Ansprüche 53 bis 70 definiert ist.

## Revendications

1. Pneumatique comprenant au moins un élément de structure qui comporte un matériau élastomère réticulé, obtenu par réticulation d'une composition élastomère réticulable comprenant :
a) 100 pcpr (parties pour 100 parties de résine) d'au moins un élastomère polymère de diène,
b) de 1 à 50 pcpr d'au moins un matériau en feuillets dont chaque feuillet présente une épaisseur individuelle de 0,01 à 30 nm,
c) de 0,1 à 15 pcpr d'au moins un composé donneur de méthylène,
d) et de 0,4 à 20 pcpr d'au moins un composé accepteur de méthylène.

2. Pneumatique conforme à la revendication 1, dans lequel ladite composition élastomère réticulable comprend de 2 à 40 pcpr, et de préférence de 5 à 30 pcpr, d'au moins un matériau en feuillets (b).

3. Pneumatique conforme à la revendication 1 ou 2, dans lequel, dans ledit matériau en feuillets (b) au nombre d'au moins un, chaque feuillet présente une épaisseur individuelle de 0,05 à 15 nm.

4. Pneumatique conforme à l'une des revendications précédentes, dans lequel ladite composition élastomère réticulable comprend de 0,3 à 10 pcpr d'au moins un composé donneur de méthylène (c).

5. Pneumatique conforme à l'une des revendications précédentes, dans lequel ladite composition élastomère réticulable comprend de 0,8 à. 15 pcpr d'au moins un composé accepteur de méthylène (d).

6. Pneumatique conforme à la revendication 1, comprenant :
- une structure de carcasse de forme générale toroïdale qui comporte des bords latéraux opposés, associés à des structures de talon respectivement droite et gauche, lesquelles structures de talon comportent au moins une tringle et au moins un remplissage ;
- une structure de ceinture, appliquée sur ladite structure de carcasse, en position radialement extérieure par rapport à celle-ci ;
- une bande de roulement, radialement superposée à ladite structure de ceinture;
- une paire de flancs appliqués latéralement sur les côtés opposés de ladite structure de carcasse ;
- et au moins un élément de structure, choisi parmi un remplissage de talon, un insert de flanc, une sous-couche de bande de roulement et une base de bande de roulement, obtenu par réticulation d'une composition élastomère réticulable comprenant :
a) 100 pcpr d'au moins un élastomère polymère de diène,
b) de 1 à 50 pcpr d'au moins un matériau en feuillets dont chaque feuillet présente une épaisseur individuelle de 0,01 à 30 nm,
c) de 0,1 à 15 pcpr d'au moins un composé donneur de méthylène,
d) et de 0,4 à 20 pcpr d'au moins un composé accepteur de méthylène.

7. Pneumatique conforme à la revendication 6, dans lequel ladite composition élastomère réticulable comprend de 2 à 40 pcpr, et de préférence de 5 à 30 pcpr, d'au moins un matériau en feuillets (b).

8. Pneumatique conforme à la revendication 6 ou 7, dans lequel, dans ledit matériau en feuillets (b) au nombre d'au moins un, chaque feuillet présente une épaisseur individuelle de 0,05 à 15 nm.

9. Pneumatique conforme à l'une des revendications 6 à 8, dans lequel ladite composition élastomère réticulable comprend de 0,3 à 10 pcpr d'au moins un composé donneur de méthylène (c).

10. Pneumatique conforme à l'une des revendications 6 à 9, dans lequel ladite composition élastomère réticulable comprend de 0,8 à 15 pcpr d'au moins un composé accepteur de méthylène (d).

11. Pneumatique conforme à l'une des revendications 6 à 10, dans lequel ledit insert de flanc s'étend radialement depuis une position correspondant à la structure de talon jusqu'à une position correspondant à un bord latéral de bande de roulement.

12. Pneumatique conforme à l'une des revendications 6 à 11, dans lequel ladite sous-couche de bande de roulement est une couche de composition élastomère réticulable appliquée sur ladite structure de carcasse, en position radialement intérieure par rapport à celle-ci.

13. Pneumatique conforme à l'une des revendications 6 à 12, dans lequel ladite bande de roulement présente une structure "à coiffe et base" et comprend une couche radialement interne, ou base de bande de roulement, et une couche radialement externe, ou coiffe de bande de roulement.

14. Pneumatique conforme à l'une des revendications précédentes, dans lequel ledit élément de structure présente un module élastique dynamique E' qui vaut au moins 5 MPa à 70 °C.

15. Pneumatique conforme à la revendication 14, dans lequel ledit élément de structure présente un module élastique dynamique E' qui vaut de 8 à 80 MPa à 70 °C.

16. Pneumatique conforme à l'une des revendications précédentes, dans lequel ledit élément de structure présente un module en traction à 100 % d'allongement (module à 100 %) d'au moins 3 MPa.

17. Pneumatique conforme à la revendication 16, dans lequel ledit élément de structure présente un module en traction à 100 % d'allongement (module à 100 %) de 4 à 20 MPa.

18. Pneumatique conforme à l'une des revendications précédentes, dans lequel ledit élément de structure présente une dureté IRHD qui vaut au moins 65 à 23 °C.

19. Pneumatique conforme à la revendication 18, dans lequel ledit élément de structure présente une dureté IRHD qui vaut de 70 à 95 à 23 °C.

20. Pneumatique conforme à l'une des revendications précédentes, dans lequel l'élastomère polymère de diène (a) présente une température de transition vitreuse inférieure à 20 °C.

21. Pneumatique conforme à la revendication 20, dans lequel l'élastomère polymère de diène (a) est choisi parmi du cis-1,4-polyisoprène naturel ou synthétique, du 3,4-polyisoprène, du polybutadiène, les copolymères d'isoprène et d'isobutène éventuellement halogénés, les copolymères de 1,3-butadiène et d'acrylonitrile, les copolymères de styrène et de 1,3-butadiène, les copolymères de styrène, d'isoprène et de 1,3-butadiène, et les copolymères de styrène, de 1,3-butadiène et d'acrylonitrile, ainsi que les mélanges de ces polymères.

22. Pneumatique conforme à l'une des revendications précédentes, dans lequel la composition élastomère réticulable comprend du cis-1,4-polyisoprène naturel ou synthétique, en une quantité représentant au moins 10 % du poids total de l'élastomère polymère de diène (a) au nombre d'au moins un.

23. Pneumatique conforme à la revendication 22, dans lequel la composition élastomère réticulable comprend du cis-1,4-polyisoprène naturel ou synthétique, en une quantité représentant de 20 à 100 % du poids total dudit élastomère polymère de diène (a) au nombre d'au moins un.

24. Pneumatique conforme à l'une des revendications précédentes, dans lequel la composition élastomère réticulable comprend en outre au moins un élastomère (a') qui est un polymère d'une ou de plusieurs mono-oléfines et d'un comonomère oléfinique ou de dérivés de ceux-ci.

25. Pneumatique conforme à la revendication 24, dans lequel le polymère élastomère (a') est choisi parmi les copolymères d'éthylène et de propylène EPR, les copolymères d'éthylène, de propylène et de diène EPDM, du polyisobutène, les caoutchoucs butyl et les caoutchoucs butyl halogénés, ainsi que les mélanges de ces polymères.

26. Pneumatique conforme à l'une des revendications 20 à 25, dans lequel l'élastomère polymère de diène (a) ou le polymère élastomère (a') porte au moins un groupe fonctionnel choisi parmi les groupes carboxylique, carboxylate, anhydride, ester et époxy.

27. Pneumatique conforme à l'une des revendications précédentes, dans lequel ledit matériau en feuillets (b) est choisi parmi des phyllosilicates tels que les smectites comme les montmorillonite, bentonite, nontronite, beidellite, volkonskoïte, laponite, hectorite, saponite, sauconite, magadite, kenyasite et stevensite, la vermiculite, l'halloysite, la séricite, les oxydes de type aluminate et l'hydrotalcite, ainsi que leurs mélanges.

28. Pneumatique conforme à la revendication 27, dans lequel ledit matériau en feuillets (b) est de la montmorillonite.

29. Pneumatique conforme à l'une des revendications précédentes, dans lequel ledit matériau en feuillets (b) est traité avec un agent de compatibilisation.

30. Pneumatique conforme à la revendication 29, dans lequel ledit agent de compatibilisation est choisi parmi les sels d'ammonium ou de phosphonium quaternaire de formule générale (I) : 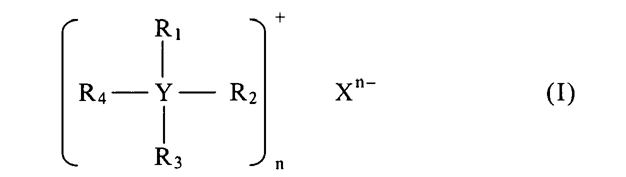 dans laquelle
- Y représente un atome d'azote N ou de phosphore P ;
- R₁, R₂, R₃ et R₄ représentent des enstités qui peuvent être identiques ou différentes et représentent chacun :
- un groupe alkyle ou hydroxyalkyle linéaire ou ramifié en C₁₋₂₀,
- un groupe alcényle ou hydroxyalcényle linéaire ou ramifié en C₁₋₂₀,
- un groupe symbolisé par R₅-SH ou R₅-NH₂ où R₅ représente un groupe alcanediyle linéaire ou ramifié en C₁₋₂₀,
- un groupe aryle en C₆₋₁₈,
- un groupe aryl-alkyle ou alkyl-aryle en C₇₋₂₀,
- ou un groupe cycloalkyle en C₅₋₁₈, lequel groupe cycloalkyle peut comporter un hétéroatome, tel un atome d'oxygène, d'azote ou de soufre ;
- Xⁿ⁻ représente un anion, tel un ion chlorure, sulfate ou phosphate;
- et n représente le nombre 1, 2 ou 3.

31. Pneumatique conforme à l'une des revendications précédentes, dans lequel le composé donneur de méthylène (c) est choisi parmi les hexa-méthylènetétramine (HMT), hexakis(méthoxyméthyl)mélamine (HMMM), formaldéhyde, paraformaldéhyde, trioxane, 2-méthyl-2-nitro-1-propanal, les résines de mélamine à substituant, comme les résines de N-hydroxy-méthyl-mélamine, les dérivés du glycolurile, comme le tétrakis(méthoxy-méthyl)glycolurile, et les résines de type urée-formol, comme les résines urée-formol butylées, ainsi que les mélanges de tels composés.

32. Pneumatique conforme à la revendication 31, dans lequel le composé donneur de méthylène (c) est de l'hexaméthylènetétramine (HMT) ou de l'hexakis(méthoxyméthyl)mélamine (HMMM).

33. Pneumatique conforme à l'une des revendications précédentes, dans lequel le composé accepteur de méthylène (d) est choisi parmi les résorcinol, pyrocatéchol, hydroquinone, pyrogallol, phloroglucinol, 1-naphtol et 2-naphtol, et les résines phénoliques obtenues par condensation d'un phénol, portant éventuellement un substituant, et d'un aldéhyde comme le formaldéhyde, l'acétaldéhyde et le furfural, ainsi que les mélanges de tels composés.

34. Pneumatique conforme à la revendication 33, dans lequel le composé accepteur de méthylène (d) est du résorcinol.

35. Pneumatique conforme à l'une des revendications précédentes, dans lequel le composé donneur de méthylène (c) et le composé accepteur de méthylène (d) sont ajoutés à la composition élastomère réticulable sous forme précondensée.

36. Pneumatique conforme à l'une des revendications précédentes, dans lequel ladite composition élastomère réticulable comprend de 0 à 120 pcpr d'au moins une charge renforçante (e) qui est un noir de carbone.

37. Pneumatique conforme à la revendication 36, dans lequel ladite composition élastomère réticulable comprend de 20 à 90 pcpr d'au moins une charge renforçante (e) qui est un noir de carbone.

38. Pneumatique conforme à l'une des revendications précédentes, dans lequel ladite composition élastomère réticulable comprend au moins un agent de couplage de type silane (f).

39. Pneumatique conforme à la revendication 38, dans lequel ledit agent de couplage de type silane (f) est choisi parmi ceux qui comportent au moins un groupe silane hydrolysable, qui peuvent être représentés par la formule générale (II) suivante :
(R)₃Si-CₙH₂ₙ-X (II)
dans laquelle les substituants représentés par R, qui peuvent être identiques ou différents, sont choisis parmi les groupes alkyle, alcoxy et aryloxy et les atomes d'halogène, pourvu qu'au moins l'un des symboles R représente un groupe alcoxy ou aryloxy, n représente un nombre entier qui vaut de 1 à 6, bornes incluses, et X représente un groupe choisi parmi les groupes nitroso, mercapto, amino, époxyde, vinyle et imido, un atome de chlore ou un groupe de formule -(S)ₘ-CₙH₂ₙ-Si(R)₃ ou -S-CO-R, où m et n représentent des nombres entiers qui valent de 1 à 6, bornes incluses, et R a la signification indiquée ci-dessus.

40. Pneumatique conforme à la revendication 38 ou 39, dans lequel ledit agent de couplage de type silane (f) se trouve présent dans ladite composition élastomère réticulable en une proportion de 0 à 10 pcpr.

41. Pneumatique conforme à la revendication 40, dans lequel ledit agent de couplage de type silane (f) se trouve présent dans ladite composition élastomère réticulable en une proportion de 0,5 à 5 pcpr.

42. Pneumatique conforme à l'une des revendications précédentes, dans lequel ladite composition élastomère réticulable comprend des fibres discontinues (g).

43. Pneumatique conforme à la revendication 42, dans lequel lesdites fibres discontinues (g) sont des fibres d'aramide.

44. Pneumatique conforme à la revendication 43, dans lequel lesdites fibres d'aramide sont des fibres de poly(paraphénylène téréphtalamide) à courtes fibrilles.

45. Pneumatique conforme à la revendication 43 ou 44, dans lequel lesdites fibres d'aramide sont préalablement dispersées dans une matrice polymère choisie parmi du caoutchouc naturel, les copolymères de butadiène et de styrène, et les copolymères d'éthylène et d'acétate de vinyle.

46. Pneumatique conforme à la revendication 45, dans lequel ladite matrice polymère est du caoutchouc naturel.

47. Pneumatique conforme à la revendication 42, dans lequel lesdites fibres discontinues (g) sont choisies parmi des fibres à base d'autres polyamides, de polyesters, de polyoléfines ou de poly(alcool vinylique), des fibres de verre, et des fibres naturelles comme de la cellulose ou de la lignine, ainsi que des mélanges de telles fibres.

48. Pneumatique conforme à l'une des revendications 42 à 47, dans lequel lesdites fibres discontinues (g) se trouvent présentes dans ladite composition élastomère réticulable en une proportion de 0 à 10 pcpr.

49. Pneumatique conforme à la revendication 48, dans lequel lesdites fibres discontinues (g) se trouvent en une proportion de 0,5 à 6 pcpr.

50. Pneumatique conforme à l'une des revendications précédentes, dans lequel il y a, dans ladite composition élastomère réticulable, au moins une charge renforçante supplémentaire, présente en une proportion de 0 à 120 pcpr.

51. Pneumatique conforme à la revendication 50, dans lequel ladite charge renforçante supplémentaire est de la silice.

52. Pneumatique conforme à la revendication 51, dans lequel il y a au moins un agent supplémentaire de couplage de type silane (f), du type défini dans la revendication 39.

53. Composition élastomère réticulable comprenant :
a) au moins un élastomère polymère de diène,
b) de 1 à 50 pcpr d'au moins un matériau en feuillets dont chaque feuillet présente une épaisseur individuelle de 0,01 à 30 nm,
c) de 0,1 à 15 pcpr d'au moins un composé donneur de méthylène,
d) et de 0,4 à 20 pcpr d'au moins un composé accepteur de méthylène.

54. Composition élastomère réticulable conforme à la revendication 53, qui comprend de 2 à 40 pcpr, et de préférence de 5 à 30 pcpr, d'au moins un matériau en feuillets (b).

55. Composition élastomère réticulable conforme à la revendication 53 ou 54, dans laquelle, dans le matériau en feuillets (b) au nombre d'au moins un, chaque feuillet présente une épaisseur individuelle de 0,05 à 15 nm.

56. Composition élastomère réticulable conforme à l'une des revendications 53 à 55, laquelle composition élastomère réticulable comprend de 0,3 à 10 pcpr d'au moins un composé donneur de méthylène (c).

57. Composition élastomère réticulable conforme à l'une des revendications 53 à 56, laquelle composition élastomère réticulable comprend de 0,8 à 15 pcpr d'au moins un composé accepteur de méthylène (d).

58. Composition élastomère réticulable conforme à l'une des revendications 53 à 57, dans laquelle ledit élastomère polymère (a) de diène est défini selon l'une des revendications 20 à 23.

59. Composition élastomère réticulable conforme à l'une des revendications 53 à 58, qui comprend en outre au moins un élastomère polymère (a') qui est défini selon la revendication 24 ou 25.

60. Composition élastomère réticulable conforme à la revendication 58 ou 59, dans laquelle l'élastomère polymère de diène (a) ou le polymère élastomère (a') porte au moins un groupe fonctionnel choisi parmi les groupes carboxylique, carboxylate, anhydride, ester et époxy.

61. Composition élastomère réticulable conforme à l'une des revendications 53 à 60, dans laquelle ledit matériau en feuillets est défini selon l'une des revendications 27 à 30.

62. Composition élastomère réticulable conforme à l'une des revendications 53 à 61, dans laquelle ledit composé donneur de méthylène (c) est défini selon la revendication 31 ou 32.

63. Composition élastomère réticulable conforme à l'une des revendications 53 à 62, dans laquelle ledit composé accepteur de méthylène (d) est défini selon la revendication 33 ou 34.

64. Composition élastomère réticulable conforme à l'une des revendications 53 à 63, dans laquelle ledit composé donneur de méthylène (c) et ledit composé accepteur de méthylène (d) sont ajoutés sous forme précondensée.

65. Composition élastomère réticulable conforme à l'une des revendications 53 à 64, laquelle composition élastomère réticulable comprend au moins un noir de carbone défini selon la revendication 36 ou 37.

66. Composition élastomère réticulable conforme à l'une des revendications 53 à 65, laquelle composition élastomère réticulable comprend au moins un agent de couplage de type silane (f) défini selon l'une des revendications 39 à 41.

67. Composition élastomère réticulable conforme à l'une des revendications 53 à 66, dans laquelle il y a au moins une charge renforçante supplémentaire, présente en une proportion de 0 à 120 pcpr.

68. Composition élastomère réticulable conforme à la revendication 67, dans laquelle ladite charge renforçante supplémentaire est de la silice.

69. Composition élastomère réticulable conforme à la revendication 68, dans laquelle il y a au moins un agent supplémentaire de couplage de type silane (f), défini selon l'une des revendications 39 à 41.

70. Composition élastomère réticulable conforme à l'une des revendications 53 à 69, qui comprend en outre des fibres discontinues (g), définies selon l'une des revendications 43 à 49.

71. Article de manufacture réticulé, obtenu par réticulation d'une composition élastomère réticulable conforme à l'une des revendications 53 à 70.
